(19) Europäisches Patentamt
European Patent Office
Office européen des brevets

(11) **EP 2 923 076 B1**

## (12) EUROPEAN PATENT SPECIFICATION

(45) Date of publication and mention
of the grant of the patent:
**25.10.2017 Bulletin 2017/43**

(21) Application number: **13808173.2**

(22) Date of filing: **13.11.2013**

(51) Int Cl.:
***F03B 13/22*** *(2006.01)*      ***F03B 15/06*** *(2006.01)*
***F03B 13/10*** *(2006.01)*

(86) International application number:
**PCT/GB2013/052998**

(87) International publication number:
**WO 2014/076477 (22.05.2014 Gazette 2014/21)**

(54) **A FLOWING-WATER DRIVABLE TURBINE ASSEMBLY**

MIT FLIESSWASSER BETREIBBARE TURBINENANORDNUNG

ENSEMBLE TURBINE POUVANT ÊTRE ENTRAÎNÉ PAR L'EAU EN MOUVEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.11.2012 GB 201220428**

(43) Date of publication of application:
**30.09.2015 Bulletin 2015/40**

(73) Proprietor: **Sustainable Marine Energy Limited
Edinburgh EH6 6QW (GB)**

(72) Inventor: **HAYMAN, Jason
East Cowes
Isle of Wight P032 6RF (GB)**

(74) Representative: **Warren, Caroline Elisabeth et al
Mathys & Squire LLP
The Shard
32 London Bridge Street
London SE1 9SG (GB)**

(56) References cited:
**WO-A2-2009/004420      DE-A1-102010 033 788
GB-A- 2 460 309      US-A- 6 091 161**

**Description**

The present invention relates to a flowing-water driveable turbine assembly to be located in river or sea areas with unidirectional, or bi-directional, water flows to convert the kinetic energy of the water flow into a more easily transferable form of energy, like, for example, hydraulic energy or electrical energy.

It is well known to drive a turbine by flow of water. The extraction of kinetic energy from the water flow causes a reduction in the momentum of the passing water which in turn creates large reaction forces on the turbine. These reaction forces manifest themselves primarily as a drag force acting in the direction of water flow. For example, turbines can weigh anywhere from 800kg up to 200 tonnes and can have a rotor diameter between 4 and 21m. Smaller turbines can have a thrust of around 45kN while the larger turbines may have a thrust of around 1MN (equivalent to 100 tonnes) under typical water flow of around 6 knots. Thus, a flowing-water driveable turbine assembly must be firmly anchored. Often turbine assemblies are anchored in deep water to avoid interaction with waves found near the surface or to avoid collisions with boats. However, turbines must be transportable to an anchoring site. Turbine assemblies must also be accessible for maintenance and repair in a reasonable amount of time. These aspects of water-driveable turbine technology pose substantial engineering challenges. Fluid dynamics can be complex to simulate effectively and moreover real world flow conditions can vary significantly. As a result many paper proposals for turbines are found not to be practicable. A simple but effective mounting configuration would ameliorate the engineering challenges and make practical use of tidal or current energy viable, solving a long desired and environmentally beneficial challenge.

Patent publication No. WO99/02853 discloses a stream turbine to cover large areas of water streams and which can be manufactured in a ship yard and transported to a site of use and be anchored there. The stream turbine as a whole can be floated and towed for maintenance or repair.

Patent publication Nos. WO2004/085845 and WO2005/061887 disclose support structures for supporting water current turbines in a sea or river estuary. The support structure with turbines may be floated to the water surface for maintenance or repair.

Patent publication US 6091161 describes a method of controlling a tethered, underwater, water current-driven turbine, power-generating device. A predetermined maximum depth and a predetermined minimum depth are set. In response to sensing depth of the device, an ascend protocol or a descend protocol are selectively invoked. These protocols maintain an operating depth of the device that is midway between the predetermined maximum depth and the predetermined minimum depth. The turbine includes variable-pitch rotor blades. A maximum allowable drag force load on the turbine rotors is selected. The pitch of the variable-pitch rotor blades on the turbine is adjusted such that the drag force loading of the device does not exceed a maximum design level.

Patent publication GB 2460309 describes an apparatus comprising a turbine to be driven when submerged in a current of water; a lifting body for generating a lift force upon the turbine when the turbine is submerged in the current; the apparatus is secured to a tether; and a stabilizer for dynamically stabilizing the apparatus in a first configuration in the current when the current flows in a first direction, and in a second configuration when the current flows in a second different direction. The geometrical relationship between the securing points, the centre of drag on the apparatus and the centre of lift of the apparatus in the first configuration is different to the corresponding geometrical relationship in the second configuration.

WO 2009/004420 A2 describes a method of controlling a tethered, underwater, water current-driven turbine, power-generating device. The device is comprised of dual turbines and dual rotor blades turned by fluid flow, each turbine including one or more generators driven by rotor blades. The device is connected by device tethers to a strut, which is moveable to control depth of the device. The strut is connected to the ocean floor by tripodal tethers: a main tether, a left side tether and a right side tether, which are strut control tethers. One or more winches are controlled to maintain operation of the device within set parameters by varying the tension on one or more of the strut control tethers.

The present invention is set out in the appended independent claim, with preferred features set out in the dependent claim.

Described herein is a turbine assembly with variable net positive buoyancy for generating power from water currents. The turbine assembly can be slightly positively buoyant to enable, for example, installation and retrieval. The turbine assembly can also be anchored, for example to a sea bed or river bed. When anchored, the variable net buoyancy of the turbine assembly can be increased to enable the turbine assembly to be positioned at different depths in a body of water. When positioned in this way, in a substantially fixed position, the turbine assembly can generate power from water currents at selected depths in a body of water. The variable net buoyancy is provided by a combination of fixed and variable buoyancy in the turbine assembly. The anchoring system provides an opposing force to the force provided by the net positive buoyancy to hold the turbine assembly at the selected depth.

In an aspect of the present invention there is provided a submersible turbine assembly comprising a frame sized and configured for supporting one or more flowing water driven turbines at a predetermined depth range below the surface of a water body having a bed, the frame including at least one fixed buoyancy component and at least one variable buoyancy component and optionally one or more hydrodynamic lift-generating surfaces, the one or more flowing water driven turbines being expected to produce a drag force which varies with water velocity, the assembly being arranged to be maintained in a predetermined position above the water body bed and submerged below the expected water body surface by at least two upstream taut mooring line runs and at least one downstream taut mooring line run, wherein the mooring line runs are arranged to be anchored to the water body bed at respective anchor points spaced apart from a point below the expected position of the assembly by at least the height of the assembly above the water bed, the frame having attachment points for said taut mooring line runs comprising upper and lower attachment points for spaced apart attachment of upper and lower or primary and secondary mooring lines or cables forming each mooring line run, the attachment points arranged to permit movement of at least some of the mooring lines relative to the frame during installation and having an arrangement for locking the mooring lines relative to the frame during use, the assembly being arranged so that in use in a water current having a nominal flow velocity of 3 metres per second both the upstream and downstream mooring line runs remain taut and wherein the net upward force resulting from the fixed and variable buoyancy and any hydrodynamic lift minus the weight of the assembly is at least 25% of the drag on the structure and thrust produced by the at least one turbine.

We have found through extensive tank-testing and simulation that this particular configuration provides a simple but effective arrangement that gives workable stability in a vertical direction, horizontal position keeping and resistance to "toppling" throughout a wide variety of flow conditions that are likely to be encountered in most real world applications.

Preferably the net upward force in a nominal flow velocity of 5 metres per second is no greater than about 200% of the drag on the structure and thrust. This constraint retains stability within a practical structure.

Provided herein is a turbine assembly comprising at least one flowing- water driveable turbine for generating power from water flow, wherein the turbine assembly has a variable positive buoyancy in water and the turbine assembly is arranged to be anchored by an anchoring system to anchoring points on a water bed, wherein the turbine assembly comprises a buoyancy device comprising a fixed buoyant material, and a ballast tank configured to be filled with water to reduce the positive buoyancy provided by the buoyancy device, wherein the fixed buoyant material is arranged around the ballast tank to provide a cradle of fixed buoyant material around the ballast tank.

The buoyancy device may be elongate, and arranged to lie with its length along the direction of predominant water flow, wherein the cradle of fixed buoyant material is arranged so that the buoyancy provided by the fixed buoyant material is symmetrical along at least one of the length and width of the ballast tank. The cradle of fixed buoyant material may be arranged at least partially beneath the ballast tank, and/or arranged partially above the ballast tank so as to surround the ballast tank. As an alternative, the cradle of fixed buoyant material may comprise a frame to fix the positions of one or more turbines relative to one or more buoyancy devices. As a further alternative, the frame provides the cradle underneath the one or more buoyancy devices.

The net positive buoyancy may be selected to be sufficient to constrain the turbine assembly against a reactive downward force provided by an anchoring system, to maintain that position under external downward vertical forces up to a selected threshold force, and to enable the turbine assembly to be downwardly displaced in the event that the downward vertical force exceeds the selected threshold force. The selected threshold force can be selected to restrain movement of the turbine assembly such that excessive load is not applied to the mooring lines of the anchoring system. The selected threshold force may be selected to correspond to the force exerted by a wave having a horizontal or vertical wave particle velocity of, for example 1 metre per second. The net positive buoyancy is selected to maintain tension in all of the mooring lines of the anchoring system.

The net positive buoyancy of the turbine assembly when the ballast tank is flooded may be less than 15% of the positive buoyancy when the ballast tank is empty of water, and the fixed buoyant material may be sufficient to maintain positive buoyancy of the turbine assembly when the ballast tank is flooded. In another possible arrangement, the fixed buoyant material and the ballast tank are arranged so that the positive buoyancy of the turbine assembly when the ballast tank is flooded is less than 5 tonnes. In one arrangement, the net positive buoyancy of the turbine assembly when the ballast tank is flooded may be around 200kg. The fixed buoyant material and the ballast tank may be arranged so that the positive buoyancy of the turbine assembly when the ballast tank is empty is sufficient to react both the combined hydrodynamic drag and thrust forces generated by the turbines such that the device does not move down in the water column under operating conditions when the turbine is operating.

The turbine assembly may comprise a winch and a tag line connectable to the anchoring system by a mooring line wherein the winch is operable to pull the mooring line into the turbine assembly using the tag line, and the breaking stress of the mooring line is greater than the breaking stress of the tag line. Alternatively, the mooring line and the tag line are the same type and/or size of line and have substantially equal breaking stresses. The tag line may be coupled to the mooring line by a coupling member arranged to engage with a locking means of the turbine assembly, wherein the locking means is operable to lock the coupling member to fix the mooring line to the turbine assembly to relieve tensile load from the winch. As an alternative, in a smaller turbine assembly or where loads are not excessive, the lines can be locked off using the winch. The coupling member may be tapered to guide the coupling member into the locking means as the winch winds in the tag line.

The turbine assembly may comprise a hydrofoil for converting water current into hydrodynamic lift to provide an upward force on the turbine assembly. For example, the turbine assembly may comprise a frame comprising a plurality of frame members arranged to support the turbine relative to the buoyancy device, wherein at least one of the frame members comprises the hydrofoil. The use of a hydrofoil to provide an upward force can be used as at least a partial substitute for providing upward force through buoyancy, thus reducing the net buoyancy required in the assembly.

Described herein is a turbine assembly comprising at least one flowing- water driveable turbine for generating power from water flow, wherein the turbine assembly has a buoyancy device operable to provide variable positive buoyancy in water and the turbine assembly is arranged to be anchored by an anchoring system to anchoring points on a water bed, wherein the turbine assembly comprises a frame for supporting the turbine, wherein the frame comprises a plurality of frame members arranged so that, when in use the frame supports a turbine in water, a first plurality of the frame members are under tensile stress, and a second plurality of the frame members are under a compressive load, wherein the first plurality of frame members are flexible and the second plurality of frame members are rigid.

The rigid frame members may be hollow and at least one of them (e.g. a transverse, horizontal, frame member) may have a cross section selected to provide hydrodynamic lift. The first plurality of frame members may comprise cables or chains which may be surrounded by a sheath to reduce the hydrodynamic drag caused by the water flow.

Described herein is turbine assembly comprising at least one flowing- water driveable turbine for generating power from water flow, wherein the turbine assembly has a variable positive buoyancy in water and the turbine assembly is arranged to be anchored by an anchoring system to anchoring points on a water bed, wherein the turbine assembly comprises: a plurality of buoyancy devices comprising one or both of a fixed buoyant material and a ballast tank configured to be filled with water; and a frame coupled to the plurality of buoyancy devices to support the at least one turbine. One of the frame and one of the buoyancy devices may comprise a plurality of line couplings for connecting the frame to an anchoring system by a line, and one of the buoyancy devices may comprise a winch operable to winch a line through at least one line coupling to apply tensile force between the turbine assembly and the anchoring system. The turbine assembly may comprise two flowing-water driveable turbines. At least one of the line couplings may be arranged beneath the centre of buoyancy of one of the buoyancy devices, and at least one of the plurality of line couplings is arranged toward the nose or tail end of said one of the buoyancy devices.

The turbine assembly is typically arranged to float submerged at a predetermined depth below the average significant wave height experienced in a body of water. This predetermined depth may be chosen to avoid excessive loads on the turbine assembly being caused by the waves.

Described herein is a turbine assembly comprising at least one flowing- water driveable turbine for generating power from water flow in a body of water, wherein the turbine assembly has a variable positive buoyancy in water and the turbine assembly is arranged to be anchored by an anchoring system to anchoring points on the bed of the body of water to provide a downward force to constrain the turbine assembly submerged at a depth below the average significant wave height experienced in the body of water, wherein, the turbine assembly comprises at least four mutually spaced line couplings for attaching the turbine assembly to the anchoring system, and the line couplings are connected to the anchoring system by straight taut lines. One of the turbine assembly and the lines may comprise positive buoyancy selected so that the maximum deviation of the lines from a straight line is no more than 5% of the length of the line between the anchoring system and the turbine assembly, for example the lines may comprise buoyancy aiding devices.

Described herein is a method of submerging a turbine assembly having variable positive buoyancy in water, wherein the turbine assembly has at least one flowing water drivable turbine for generating power from water flow and at least one winch having a respective pull line connectable to an anchoring system, wherein the method comprises the steps of: a) floating the turbine assembly to an installation site; b) coupling the or each pull line to an anchoring system submerged in water; c) reducing the positive buoyancy of the turbine assembly; d) operating the or each winch to submerge the turbine assembly to a target location by force of tension in the or each pull line; e) locking the winch upon arrival at the target site; and f) increasing the positive buoyancy of the turbine assembly. Optionally, step e) comprises locking the or each pull line to the turbine assembly upon arrival at the target site to relieve strain from the winch.

The pull line may comprise a tag line and a mooring line having a greater breaking stress than the tag line, and in which locking the pull line to the turbine assembly comprises locking the mooring line to the turbine assembly.

Described herein is an anchoring system for anchoring a positively buoyant turbine assembly in water, wherein the turbine assembly has at least one flowing-water driveable turbine for generating power from water flow, wherein the anchoring system comprises at least three anchoring cables anchorable to at least three mutually spaced anchoring points on a water bed covering a footprint greater in width and in length than the turbine assembly, wherein each anchoring point on the water bed is attachable to two mutually spaced attachment points on the turbine assembly and wherein the anchoring system is arranged to provide a downward force to constrain the turbine assembly against the upward force of the positive buoyancy of the turbine assembly.

The anchoring system may have at least a tripod formation of three anchoring cables which provides sufficient downward reactive force and stability to constrain a positively buoyant turbine assembly against the upward force of the of the turbine assembly and against drag forces caused by water current flowing past the turbine assembly. Advantageously, inherent flexibility in the anchoring cables can absorb impacts against the turbine assembly or its rotors. Additional stability can be provided by additional anchoring cables without diminishing the anchoring system's ability to absorb shocks.

The top third of the water column (i.e. the optimal position for power extraction) in a deep water site (i.e. 40m depth or more) is inaccessible to a traditional anchoring system, such as gravity anchors or columns driven into sea bed, due to the increased hydrodynamic drag of the structure and the overturning moment caused by water current drag forces. The top third of the water column may be accessible to the anchoring system, even at deep water sites, by simply varying the length of the anchor cables. Advantageously, inherent flexibility in the anchoring cables permits the anchoring points to be positioned at suitable sites over a large area of the sea bed for example to accommodate undulations and avoid hazards. This may widen and lengthen the anchoring system's footprint and, in doing so, increase stability to counteract any increased overturning moment experienced by the turbine assembly at a greater elevation above the water bed.

The attachment points on the turbine assembly may be mutually spaced in at least a direction of upward force of buoyancy. This provides stiffer resistance to heave under water flow.

Each anchoring cable may couple the two attachment points on the turbine assembly to a single anchor point on the water bed.

Each anchoring cable, or mooring line run, may bifurcate into a pair of cable branches for coupling to the pair of mutually spaced attachment points on the turbine assembly. This provides a constraint on the turbine assembly in all six degrees of freedom.

Each anchoring cable may comprise a mooring line to constrain the turbine assembly against the upward force of the positive buoyancy of the turbine assembly, wherein each anchoring cable comprises a tag line to provide directional support to the turbine assembly and wherein the tag line branches from the mooring line. Use of different lines to perform specific functions improves the performance of the anchoring system.

The length of the mooring line and/or the length of the tag line may be variable. This permits adjustment of the orientation of the turbine assembly when anchored to the water bed by the anchoring system.

The tag line may have greater elasticity than the mooring line. The tag lines absorb shock and may permit localised movement of the turbine assembly while the mooring lines maintain the fundamental stiffness of the anchoring system.

The tag line and the mooring line may be made of different materials. The mooring line may be made of a high performance material with extra strength such as DYNEEMA (trade mark) polyethylene rope. The tag lines may be made of a basic material such as braided nylon thereby economising on cost.

The tag line may branch from the mooring line at an intermediate point along the length of the mooring line. This provides a constraint on the turbine assembly in all six degrees of freedom.

The at least three anchoring cables may be four anchoring cables diverging outwardly from the turbine assembly to the water bed in a substantially pyramidal form on the water bed. This provides increased resistance to heave under water flow and constrains the assembly in all six degrees of freedom.

The at least three anchoring cables can also be at least six pairs of anchoring cables, wherein ends of each pair of anchoring cables are coupled to a respective anchor point on the water bed, wherein the anchoring cables of each pair of anchoring cables diverge from said anchoring point to where opposite ends of the anchoring cables are fixed to a pair of mutually spaced points of the turbine assembly, and wherein at least three pairs of anchoring cables are fixed to each end of the elongate turbine assembly. This provides greater stability in water flow.

An angle of inclination of the anchoring cables from the water bed and with respect to the horizontal may be no more than about 60 degrees. Alternatively, an angle of inclination of the anchoring cables from the water bed and with respect to the horizontal may be no more than about 45 degrees. This is to provide an anchoring system with vertical stability and without tending to pull the anchoring points out of their holes in the water bed.

An angle of inclination of the anchoring cables from the water bed and with respect to the horizontal may be no less than about 10 degrees. Alternatively, an angle of inclination of the anchoring cables from the water bed and with respect to the horizontal may no less than about 15 degrees. This is to provide an anchoring with horizontal stability and which also provides clearance under the turbine support for water flow. This can reduce heave on the turbine support.

An angle of inclination of the anchoring cables from the water bed and with respect to the horizontal may 30 degrees +/- 15 degrees.

At least one anchoring cable may have integral resistance to shock and/or at least one anchoring cable may be connected in series or in parallel with a damper.

The anchoring cables may be streamlined and/or equipped with vortex suppressants. This may reduce, or even eliminate, vortex induced vibration caused by water flow around the anchoring cables. It is also to reduce the hydrodynamic drag of the anchoring cables.

Each anchoring cable may be anchored in a respective hole in the water bed.

Described herein is a submersible turbine assembly comprising at least one flowing-water driveable turbine for generating power from water flow, wherein the turbine assembly is positively buoyant in water, wherein the turbine assembly comprises an anchoring system arranged to provide a downward force to constrain the turbine assembly against the upward force of the positive buoyancy of the turbine assembly, wherein the anchoring system comprises at least three anchoring cables anchorable to at least three mutually spaced points on a water bed covering a footprint greater in width and in length than the turbine assembly. A turbine assembly embodying this has an anchoring system with at least a tripod formation of three anchoring cables which provides sufficient stability to constrain a positively buoyant turbine assembly against the upward force of the of the turbine assembly and against drag forces caused by water current flowing past the turbine assembly. Advantageously, inherent flexibility in the anchoring cables can absorb impacts against the turbine assembly or its rotors. Additional stability can be provided by additional anchoring cables without diminishing the anchoring system's ability to absorb shocks.

Each anchoring point on the water bed may be attachable to two mutually spaced attachment points on the turbine assembly.

Each of the two mutually spaced attachment points on the turbine assembly may be mutually spaced in at least a direction of upward force of the positive buoyancy.

Each anchoring cable may couple each of the two mutually spaced attachment points on the turbine assembly to a single anchoring point on the water bed, wherein each anchoring cable comprises a mooring line to constrain the turbine assembly against the upward force of the positive buoyancy of the turbine assembly, wherein each anchoring cable comprises a tag line to provide directional support to the turbine assembly and wherein the tag line branches from the mooring line.

Also described herein is an anchoring cable for an anchoring system of a positively buoyant turbine assembly in water, wherein the anchoring cable comprises a helical protrusion arranged about the circumference of the anchoring cable to provide a vortex suppressant. Vortex induced vibration may become apparent after an anchoring system is installed in water with water currents. Advantageously, the anchoring cable may avoid the need to retrofit a vortex suppressant system or device in order to reduce vortex induced vibration, wandering and hydrodynamic drag caused by water flow around the anchoring cable.

The anchoring cable may be woven and the helical protrusion may be woven into the anchoring cable. This integrates production of the helical protrusion into the weaving process used to make the cable.

Alternatively, the helical protrusion is bonded to the anchoring cable. This integrates production of the helical protrusion into the cable manufacturing process.

The helical protrusion and the anchoring cable may be made of the same material. This economises on the variety of materials employed.

The pitch of the helical protrusion may be no more than sixteen times the diameter of the anchoring cable. Further, the pitch of the helical protrusion may be no more than twelve times the diameter of the anchoring cable.

The pitch of the helical protrusion may be no less than four times the diameter of the anchoring cable. Further, the pitch of the helical protrusion may be no less than eight times the diameter of the anchoring cable.

The pitch of the helical protrusion may be between eight and twelve times the diameter of the anchoring cable. This may optimise the vortex suppressing properties of the helical protrusion.

The outer diameter of the helical protrusion may be no more than 200% of the diameter of the anchoring cable. Further, the outer diameter of the helical protrusion may be no less than 110% of the diameter of the anchoring cable.

The outer diameter of the helical protrusion may be between 135% and 175% of the diameter of the anchoring cable. This may optimise the vortex suppressing properties of the helical protrusion.

The anchoring cable may be made of nylon, polypropylene and/or polyethylene material. These materials are suitable for cables or ropes used under tension and they do not corrode.

Also described herein is a turbine assembly comprising at least one flowing-water driveable turbine for generating power from water flow, wherein the turbine assembly has a variable positive buoyancy in water and the turbine assembly is arranged to be anchored by an anchoring system to anchoring points on a water bed, wherein the positive buoyancy of the turbine assembly is variable between a first upward force and a second upward force greater than the first upward force, and wherein the first upward force is sufficient to constrain the turbine assembly against a downward force of an anchoring system. The positive buoyancy can be reduced when the turbine assembly is to be submerged. Then, the positive buoyancy can be increased upon arrival at the target location where a greater uplift force is required to stiffen the anchoring system. This helps to reduce effort needed to submerge the turbine assembly to its target location. Advantageously, a smaller winch with a smaller pull line may be used to perform the submerging process. Alternatively, a remote operated vehicle may be used instead which can perform the submerging process more quickly against less positive buoyancy. Variable positive buoyancy presents the operator with advantageous flexibility.

The turbine assembly may further comprise a turbine support arranged to be anchored by said anchoring system to a water bed and wherein the at least one turbine is secured to the turbine support. The turbine support provides capacity for storage of buoyancy devices.

The turbine support may have a variable positive buoyancy in water variable between the first positive buoyancy and the second buoyancy. This avoids the need to attach buoyancy to the at least one turbine.

The turbine assembly may further comprise a ballast tank fillable with a positive buoyancy medium. The ballast tank may be filled with air or another positive buoyancy medium from a surface vessel, a remote operated vehicle or from compressed air stored on board the turbine assembly to provide a readily controllable means of adjusting positive buoyancy.

The turbine assembly may further comprise means for converting water current into hydrodynamic lift to provide an upward force on the turbine assembly. This may provide a passive upward force in addition, or as an alternative, to any active upward force provided by devices such as a ballast tank fillable with air.

The means for converting water current into hydrodynamic lift may comprise at least one hydrofoil. The, or each, hydrofoil may be attached to the turbine assembly during manufacture.

The hydrodynamic lift may be variable. This may increase positive buoyancy in proportion to an increase in surrounding water current speed to progressively counteract any drag moment created by longitudinal drag.

The, or each, turbine may comprise a turbine module having a duct for directing water through the turbine. A duct may shield the turbine from turbulence caused by any adjacent turbines or wave action and to increase efficiency of energy extraction from the water current

As described herein, hydrodynamic lift and/or variable buoyancy in combination with the fixed buoyancy of the turbine assembly is sufficient to counteract the downward component of drag caused by water current flowing past the turbine assembly acting around the anchor points of the anchoring system so that the turbine assembly resists movement with change in water flow.

As described herein, the hydrodynamic lift and/or variable buoyancy of the turbine assembly acting against the downward force of the anchoring system is sufficient to counteract excursion of the turbine assembly from a target position of more than double the length of the turbine assembly with a water current at maximum target speed and/or maximum target wave height. In a further optional arrangement, the hydrodynamic lift and/or variable buoyancy of the turbine assembly acting against the downward force of the anchoring system is sufficient to counteract excursion of the turbine assembly from a target position of more than the length of the turbine assembly with a water current at maximum target speed and/or maximum target wave height.

As described herein, the hydrodynamic lift and/or additional buoyancy of the turbine assembly acting against the downward force of the anchoring system is sufficient to counteract excursion of the turbine assembly from a target position of more than double the height of the turbine assembly with a water current at maximum target speed and/or maximum target wave height. In a further optional arrangement, the hydrodynamic lift and/or additional buoyancy of the turbine assembly acting against the downward force of the anchoring system is sufficient to counteract excursion of the turbine assembly from a target position of more than the height of the turbine assembly with a water current at maximum target speed and/or maximum target wave height.

As described herein, uplift provided by the hydrodynamic lift and/or variable buoyancy of the turbine assembly is no more than 400% of the uplift provided by the fixed buoyancy of the turbine assembly.

As described herein, uplift provided by the hydrodynamic lift and/or additional buoyancy is no less that 80% of the uplift provided by the fixed buoyancy of the turbine assembly.

As described herein, maximum net upward force of positive buoyancy is no more than 150% of the weight of the turbine assembly in air. In a further optional arrangement, maximum net upward force of positive buoyancy is no more than 100% of the weight of the turbine assembly in air. In a further optional arrangement, maximum net upward force of positive buoyancy is no more than 50% of the weight of the turbine assembly in air. By minimising the net upward force of positive buoyancy smaller diameter anchoring cables may be used. This may reduce the weight of the anchoring system. Also, tension in the anchoring cables may be reduced thereby reducing forces acting upon the anchoring points.

As described herein, the first upward force is provided by a fixed buoyant material attached to the turbine assembly. This may ensure that the turbine assembly always has some degree of positive buoyancy. It may be towed on the water surface to an installation site without external intervention. A degree of positive buoyancy aids control while the turbine assembly is being submerged.

Also described herein is a turbine assembly comprising at least one flowing water driveable turbine for generating power from water flow, wherein the turbine assembly has a positive buoyancy in water, wherein the turbine assembly is arranged to be anchored by an anchoring system to a water bed, wherein the turbine assembly comprises at least one winch each with a respective pull line connectable to the anchoring system, and wherein the or each winch is operable to pull the turbine assembly towards the water bed by tensile forces acting through the pull line and wherein the or each winch is lockable against tensile forces acting through the pull line, wherein the positive buoyancy of the turbine assembly in water has an upward force to constrain the turbine assembly against a downward force of an anchoring system. Conditions at sea, in rivers and in estuaries can vary significantly and quickly. Water currents can change direction. These environmental factors present challenges when installing a large object such as a turbine assembly under water. Advantageously, the winch may provide the turbine assembly with means of self-propulsion which may submerge it directly to its installation site, despite unfavourable environmental conditions of the surrounding water, where it can be locked to the turbine assembly with a docking connector (locking means) for the mooring line, such that the tensile load in the mooring line is not borne by the winch once the mooring line is connected. This also avoids the need for a large surface vessel with a heavy lifting crane to submerge the turbine assembly to its installation site or subsequently retrieve it. This may eliminate problems associated with the motion of the surface vessel pulling in an unpredictable manner on the turbine assembly.

As described herein, the positive buoyancy of the turbine assembly is variable. The positive buoyancy can be reduced when the turbine assembly is being submerged. Then, the positive buoyancy can be increased when the target location is reached and a greater uplift force is required. This helps to reduce tension in the pull lines and minimise effort required on the part of the winch, or winches, during submerging process. Smaller diameter anchoring cables may be used if these also perform the role of pull lines.

As described herein, the or each winch is operable externally. This economises on the weight and expense of having a motor permanently coupled to the winch.

The or each winch may be operable by an electric motor coupled thereto and wherein the electric motor is controllable remotely. This makes the turbine assembly fully self-propelled. The or each winch may be hydraulic, and the turbine assembly may comprise hydraulic power unit arranged to provide power to at least one winch.

As described herein, the or each winch is operable by a remote operated vehicle coupled thereto.

As described herein, the turbine assembly has variable positive buoyancy. The turbine assembly may have increased positive buoyancy during towing and in use and the turbine assembly may have reduced positive buoyancy while being submerged to its installation site thereby reducing the load on the or each winch.

As described herein, the at least one winch comprises at least three winches each with a pull line for connection to a part of a respective anchoring cable of the above mentioned anchoring system having at least three anchoring cables. This may provide the turbine assembly with means of self-propulsion directly to its optimal position at the installation site. Advantageously, the three winches may be used to vary the position (i.e. pitch or roll) of the turbine assembly.

As described herein, each pull line is integrally connected to a part of a respective anchoring cable. This anchoring cables double-up as pull lines thereby making economic use of material.

Also described herein is a turbine assembly comprising a turbine support with positive buoyancy in water, wherein the turbine support is arranged to be anchored by an anchoring system to a water bed and a plurality of turbine modules each with positive buoyancy in water, wherein each turbine module is secured to the turbine support, wherein the combined positive buoyancy of the turbine support and the turbine modules in water has an upward force to constrain the turbine support and the turbine modules against a downward force of an anchoring system, wherein each turbine module has a duct and a flowing-water driveable turbine mounted in the duct, wherein the duct is for directing water through the turbine and the turbine is for generating power from water flow.

The turbine assembly may be operable to accept any type of flowing-water driveable turbine (i.e. axial flow turbine or cross flow turbine) once it is fitted to a turbine module. This means that, if desired, different turbines from different manufacturers can operate alongside each other without modification to the turbine support. This improves flexibility in repair and maintenance and reduces cost, time and energy.

The modular turbine assembly may comprise only one turbine module. This would typically be when the turbine module assembly is used for testing or prototyping, although there may be other reasons, like, for example, when all but one of the turbine modules have been detached from the turbine support for maintenance or repair or for use in a narrow river or other size-constrained site.

Water generally flows in one direction in a river whereas tidal flow at sea generally causes water flow in two directions. In an optional arrangement of the present invention, the turbine is driveable by water flowing in either direction through the duct. This has the advantage that the turbine assembly is able to harness the kinetic energy of unidirectional river water flow or bidirectional tidal water flow at sea.

The duct reduces the effects of change in tidal flow angle, off-axis water flow and wave interaction by straightening and aligning water flow with the axis of the turbine. As described herein the duct defines a hollow generally cylindrical bore, wherein the turbine is a horizontal axis turbine with a rotor co-axial with the duct, and wherein the rotor is matched to the internal diameter of the duct.

As described herein, the duct is in fluid communication with a flared annular section at each end of the duct and wherein each flared annular section tapers towards the duct. Depending on the water flow direction, the down-flow flared annular section scoops water into the duct and the other emits water. This can increase water flow through the duct.

As described herein, the flared annular sections are mounted upon the turbine support. This can reduce the size, weight and complexity of the turbine modules.

As described herein, boundaries between the duct and the flared annular sections have at least one gap to promote water flow augmentation around where water flows into the flared annular section down-flow from the duct. This reduces water eddies by re-establishing a boundary layer connection between water flow and the diffuser i.e. the down-flow flared annular section. A reduction in water eddies is beneficial because it may reduce parasitic energy losses and drag. The at least one gap may be one gap or a series of gaps or slots.

As described herein, the at least one gap is an annular gap. This can promote water flow augmentation around the whole circumference of the diffuser i.e. the down-flow flared annular section.

As described herein, each flared annular section has an array of transverse vanes. The vanes help prevent ingress of marine flora, fauna and debris and guide such objects clear of the duct. The vanes help straighten the water flowing into the turbine.

As described herein, the turbine module is streamlined to reduce interaction with upward and downward wave motion in the water surrounding the turbine module. Wave motion, particularly upward and downward wave motion, can put significant force on the anchoring system of a turbine assembly and, over time, can damage or weaken the anchoring system. This is especially so when the turbine assembly is under load of tidal flow. Interaction with wave motion is to be reduced as much as possible by, for example, anchoring the turbine assembly in deep water i.e. 40m of water. Streamlining the turbine modules has the advantage of further reducing wave interaction by presenting a decreased horizontal cross-sectional area.

As described herein, each turbine module is detachably docked with the turbine support. All of the turbine assembly's components can be floated to an anchorage site where they are assembled. The turbine support is submerged and permanently anchored to the water bed. The turbine modules are submerged to detachably dock with the turbine support where they remain until maintenance, repair or replacement is needed. In that event, one turbine module may be floated to the water surface without need of disturbing the rest of the turbine assembly. This saves time, energy and cost. If maintenance or repair is unexpectedly protracted a decision to substitute the defective turbine module can be taken quickly and efficiently. Moreover, if a substitute turbine module is not available then the defective turbine module can be returned to harbour while the rest of the turbine assembly continues to operate uninterrupted.

As described herein, the positive buoyancy of the turbine module is localised above and below the duct. The turbine module can float on its side with an increased horizontal cross-sectional area because the streamlined profile naturally lies flat upon the water surface. This improves stability, and reduces the draft, of the turbine module when it is being towed in water.

As described herein, the turbine module is elongate in the direction of water flow through the duct and wherein an external surface of the turbine module has a generally elliptical transverse cross-sectional profile. An elliptical profile is an example of a streamlined profile that helps to reduce interaction with upward or downward wave motion by presenting a decreased horizontal cross-sectional area.

As described herein, the turbine is removable through a removable side of the turbine module. Complete access to the turbine in open water, and even removal of the turbine by floating crane, may be highly beneficial in saving time, energy and cost in repair or maintenance to the turbine module.

As described herein, each turbine module is adapted to dock with the turbine support in a positive location arrangement. This has the advantage of automating the docking process because the turbine module finds its own docking location as it is lowered into the turbine support. The process may be further automated by latches to fix the turbine module docked to the turbine support. Alternative fixing means, like, for example, a lock or a pin may be employed.

As described herein, the turbine support is adapted to dock with three to five turbine modules.

As described herein, the positive buoyancy of the support structure and/or the turbine module is variable. The buoyancy of the support structure or turbine module may be reduced to facilitate submerging, especially if a remote operated vehicle is to be used instead of a winch. When the turbine support or the turbine module is assembled with the turbine fully assembly the buoyancy may be increased to stiffen the anchoring system. Variable buoyancy presents the operator with advantageous flexibility.

The turbine support may be provided separately for assembly with the modular turbine assembly.

The turbine module may be provided separately for assembly with the modular turbine assembly.

Also described herein is a method of assembling the modular turbine assembly in open water which comprises the steps of: towing the turbine support to an anchorage site; anchoring the turbine support to a water bed with an anchoring system; towing the plurality of turbine modules to the anchorage site; submerging one of the turbine modules to dock with the turbine support; and repeating the last step until the full complement of turbine modules is docked with the turbine support.

The depth of the turbine assembly depends on turbine size and the conditions of the anchoring site. The minimum submerged depth could be 1m in a river or in a sheltered position. In certain conditions the depth may be less than 1m whereby the turbine support is not entirely submerged. As described herein, the method of assembling a modular turbine assembly comprising an additional step of submerging the turbine support between steps of towing it and anchoring it.

As described herein, the last step of the method of assembling a modular turbine assembly in open water is performed by force of a winch with at least one pull line and wherein the winch is mounted upon the turbine support. This is a reliable way of ensuring the turbine module docks with the turbine assembly.

Alternatively, the last step of the method of assembling a modular turbine assembly in open water is performed by force of a remote operated submergible vehicle. This is a suitable alternative if a winch is not fitted to the turbine support, or it is inoperable.

As described herein, the positive buoyancy of the turbine module is reduced when submerged by a remote access vehicle and increased after docked with the turbine support. This makes it easier for the remote access vehicle to submerge the turbine module.

As described herein, the method of assembling a modular turbine assembly in open water is performed with the anchoring system described above due to its inherent resistance to heave under water flow.

Also described herein is a method of repair or maintenance to the modular turbine assembly comprises the steps of tethering one of the turbine modules for controlled floatation to the water surface; detaching the turbine module from the turbine support; floating the turbine module to the water surface; and performing repair or maintenance work upon the turbine module or submerging a substitute turbine module to dock with the turbine support.

As described herein, the method of repair or maintenance to a modular turbine assembly is performed by force of a winch with at least one pull line wherein the winch is mounted upon the turbine support. This is a reliable way of ensuring the turbine module docks with the turbine assembly.

Alternatively, the method of repair or maintenance to a modular turbine assembly is performed by a remote operated submergible vehicle. This is a suitable alternative if a winch is not fitted to the turbine support, or it is inoperable.

As described herein, the positive buoyancy of the turbine module is reduced when submerged by a remote access vehicle and increased after docked with the turbine support. This makes it easier for the remote access vehicle to submerge the turbine module.

As also described herein, the turbine support may be provided by towing the turbine support to an anchorage site and anchoring the turbine support to a water bed with an anchoring system, and in an arrangement this would be the anchoring system described above.

As also described herein, the turbine module may be provided by towing the turbine module to the anchorage site and submerging the turbine modules to dock with the turbine support.

As also described herein, there is provided a turbine assembly comprising at least one flowing-water driveable turbine for generating power from water flow, wherein the turbine assembly positive buoyancy in water and the turbine assembly is arranged to be anchored by an anchoring system to a water bed, wherein the or each turbine is mounted in a respective duct, wherein the duct is for directing water through the turbine and the turbine is for generating power from water flow, and wherein the duct is in fluid communication with a flared annular section at an end of the duct and wherein the flared annular section tapers inwardly towards the duct. The flared annular section helps to direct water current towards the duct thereby concentrating water flow past the turbine and increasing energy extraction. Alternatively, the flared annular section may act as a diffuser to direct water flow from the duct.

As described herein, a boundary between the duct and the flared annular section has at least one gap. This may reduce water eddies by re- establishing a boundary layer connection between water flow and the duct or flared annular section down-flow of the gap. A reduction in water eddies is beneficial because it may reduce parasitic energy losses and drag. The at least one gap may be one gap or a series of gaps or slots.

As described herein, the at least one gap is an annular gap. This may promote water flow augmentation around the whole circumference of the flared annular section.

As described herein, the duct is in fluid communication with a second flared annular section at a second opposite end of the duct and wherein the flared annular section tapers inwardly towards the duct. The first flared annular section can act as a concentrator of water flow through the duct while the second flared annular section can act as a diffuser of water flow from the duct, and vice versa depending on water flow direction.

As described herein, a boundary between the duct and the second flared annular section has at least one gap. This may reduce water eddies by re-establishing a boundary layer connection between water flow and the duct or second flared annular section down-flow of the gap. A reduction in water eddies is beneficial because it may reduce parasitic energy losses and drag. The at least one gap may be one gap or a series of gaps or slots.

As described herein, the at least one gap is an annular gap. This may promote water flow augmentation around the whole circumference of the second flared annular section.

As described herein, the or each turbine is driveable by water flowing in either direction through the duct. This has the advantage that the turbine assembly is able to harness the kinetic energy of unidirectional river water flow or bidirectional tidal water flow at sea.

As described herein, the duct defines a hollow generally cylindrical bore, wherein the turbine is a horizontal axis turbine with a rotor co-axial with the duct, and wherein the rotor is matched to the internal diameter of the duct.

As described herein, the positive buoyancy of the turbine assembly in water has an upward force to constrain the turbine assembly against a downward force of an anchoring system,

Also described herein is a method of raising a submersible platform having variable positive buoyancy and suitable for mounting a power generating turbine thereon; wherein the submersible platform is anchored by an anchoring system; and wherein the submersible platform is configured to reduce the variable positive buoyancy before the anchoring system is released. Reducing the positive buoyancy before raising the platform is counter-intuitive, but maintaining a high level of positive buoyancy risks damaging the platform by causing it to surface too quickly.

Further, there is provided a submersible apparatus for supporting a turbine for generating electrical power from flowing water, comprising: four couplings, spaced apart on the apparatus and arranged spatially so that the attitude of the apparatus can be altered; two mooring lines wherein each mooring line is coupled to the apparatus by two tethers, and each tether is coupled to a different one of the four couplings; an orientation sensor configured to sense the orientation of the apparatus; and an attitude controller coupled to the orientation sensor to alter the attitude of the apparatus in a submerged position in a body of water to accommodate changes in the direction of flow of the water based on the sensed orientation; wherein altering the attitude of the apparatus comprises altering the tension in the tethers.

Further, there is provided a submersible apparatus for supporting a turbine for generating electrical power from flowing water, the apparatus comprising: a turbine; and an orientation controller, operable to adjust the orientation of the turbine with respect to the apparatus and configured to change the orientation of the turbine to inhibit generation of power from the turbine in the event that a fault is detected.

Further, there is provided a submersible apparatus for supporting a turbine for generating electrical power from flowing water, the apparatus comprising: a turbine; and an orientation controller, operable to adjust the orientation of the turbine with respect to the apparatus and configured to change the orientation of the turbine to inhibit generation of power from the turbine in the event that the speed of the water is less than a selected threshold speed.

Further, there is provided a submersible apparatus for supporting a turbine for generating electrical power from flowing water, the apparatus comprising: a turbine; and an orientation controller, operable to adjust the orientation of the turbine with respect to the apparatus and configured to change the orientation of the turbine to enable generation of power from the turbine in the event that the speed of the water is greater than a selected threshold speed.

Further, there is provided a remotely controllable unmanned surface vessel for controlling a submersible, the vessel comprising: a motive unit for moving the surface vessel; a first communication interface for communicating with a remote device, and being coupled to the motive unit to enable the remote device to control the motive unit; and a second communication interface for communicating with the submersible to control the submersible, and being coupled to the first communication interface for communication between the submersible and the remote device; wherein the surface vessel comprises controller configured to operate the motive unit to move the surface vessel in response to a command sent to the submersible from the remote device so that the submersible stays within communication range of the surface vessel.

Further, there is provided a method of controlling a flowing-water driveable turbine apparatus, the method comprising: sensing water speed; in the event that the water speed is within a first predetermined speed range, providing a power supply to a power deriver arranged to derive electrical power from the turbine; and in the event that the fluid speed is not within the first predetermined speed range, not providing a power supply to the power deriver.

Further, there is provided a flowing water driveable turbine apparatus comprising: a water speed sensor; a power deriver for deriving electrical power from driving of the turbine; and a controller configured to couple a power supply to the power deriver in the event that the fluid speed is within a first predetermined speed range, and to decouple the power supply from the power deriver in the event that the fluid speed is not within the first predetermined speed range.

Embodiments of the turbine assembly, the anchoring system, and the anchoring cables will now be described, by way of example only with reference to the drawings in which:

Figure 1 is a perspective view of an embodiment of the modular turbine assembly anchored to a sea bed;
Figure 2 is a perspective view a turbine module docking with a turbine support of the modular turbine assembly of Figure 1;
Figure 3 is a plan view of the top of the turbine support;
Figure 4 is perspective view of the turbine module;
Figure 5 is a front elevation view of the turbine module;
Figure 6 is a cross-sectional view of the turbine module with a flared annular section at each end; and
Figure 7A to 7C show three stages of disassembling the turbine module.
Figure 8 is a perspective view of an embodiment of a turbine assembly anchored to a sea bed by an anchoring system;
Figure 9 is a front elevation view of a modification to the turbine assembly of Figure 8 having two turbines;
Figure 10 is a front elevation view of a modification to the turbine assembly of Figure 8 having four turbines;
Figure 11 is a perspective view with cut-away of a winch for adjusting a tag line of an anchor cable of the anchoring system of Figure 8;

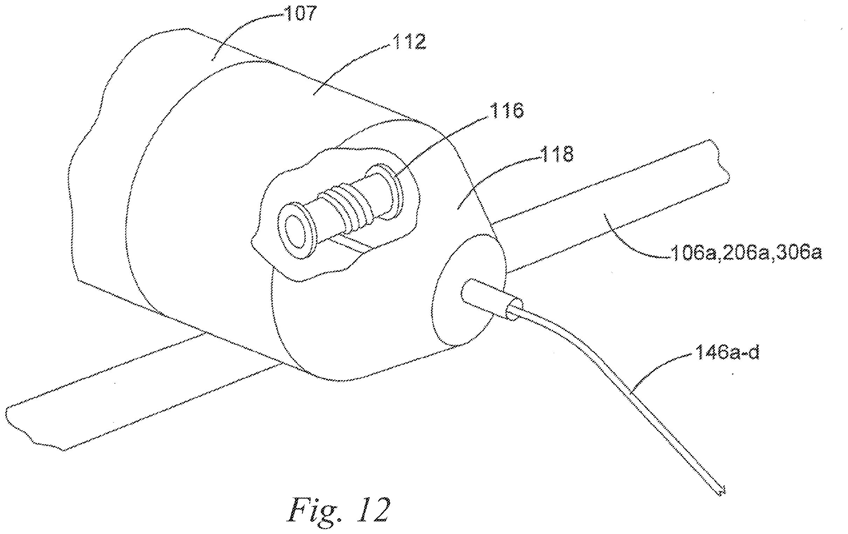

Figure 12 is a vertical cross-section through a buoyancy device of the turbine assemblies of Figures 8 to 10;
Figure 13 is a cross-section through an anchoring point of the anchoring system of Figure 8;
Figure 14 is a perspective view of a tag line or a mooring line of an anchor cable of the anchoring system of Figure 8;
Figure 15 is a plan view of an embodiment of a turbine assembly anchored to a sea bed by an anchoring system;
Figure 16 is a cross-section through a buoyancy device of the turbine assembly of Figure 15 showing the buoyancy device only containing air;
Figure 17 is a cross-section through the buoyancy device of Figure 16 showing the buoyancy device being partially flooded with water;

Figure 18 is a side-elevation view of the turbine assembly of Figure 15;

Figure 19 is a side-elevation view of the turbine assembly of Figure 18 showing the turbine assembly before being raised and also once it has been raised to the surface of the water;

Figure 20 is a side-elevation view of the turbine assembly of Figure 19 showing a diver detaching the assembly from the anchoring system;

Figures 21 and 22 show the gear mechanism used to rotate the turbine and blades;

Figure 23 shows a side-elevation view of the turbine assembly, having been detached from the anchoring system, being towed by two vessels;

Figure 24 shows a side-elevation view of the turbine assembly where one of the tethers in the anchoring system has broken;

Figure 25 is a plan view of the turbine assembly of Figure 24 showing the tether in the anchoring system that has broken;

Figure 26 is a plan view of the turbine assembly of Figure 25 showing the turbines in a fail-safe mode;

Figure 27 shows a side-elevation view of a surface vessel and a tethered submersible alongside a turbine assembly;

Figure 28 shows a simplified system diagram of the power electronics on board the turbine assembly;

Figure 29 shows a side-elevation view of the turbine assembly in normal operation with tidal flow in Z direction;

Figure 30 shows a plan view of the turbine assembly of Figure 29 when the tide starts to turn and tidal flow starts to flow in the Y direction;

Figure 31 shows a plan view of the turbine assembly of Figure 30 where the turbines are in the middle of rotating to face into the tidal flow Y; and

Figure 32 shows a plan view of the the turbine assembly in normal operation with tidal flow in Y direction

The submersible turbine assembly of an embodiment of the invention is provided with sufficient fixed buoyancy to ensure that the entire assembly is slightly net positively buoyant. This enable the turbine assembly to be buoyant during the transitional stages, such as during installation, surfacing or retrieval.

This fixed positive buoyancy is provided by fixed buoyancy compartments that are filled by a medium that provide sufficient displacement, for example, air, foam or nitrogen. Buoyancy is calculated in kilograms as being the cube of volume multiplied by the density of, in this case, sea water minus the mass of the turbine assembly:

$$\text{Buoyancy (kg)} = (\text{Volume (m}^3) \text{ x Density of Sea Water (Kg/m}^3)) - \text{Mass (kg)}$$

The variable buoyancy is sized to ensure that the assembly remains at its desired position in the water column and that the mooring lines, interchangeably referred to as mooring line runs, remain in tension during all operational conditions. The aim is to provide a sufficient uplift force on the assembly. The entirety of this uplift force can be provided through the variable buoyancy of the assembly. It may be possible to, in part or whole, substitute hydrodynamic uplift through the use of hydrofoils in the assembly, which would reduce the amount of buoyancy needed in the assembly to provide the uplift force. In water currents having a slower speed or lower nominal flow velocity, however, at least some of the uplift will need to be provided by the buoyancy. When current is not flowing relative to the assembly, the buoyancy provides an uplift force that keeps all of the mooring lines in tension. When the tidal steam velocities increase, the structure experiences drag. When the turbines begin to operate, a thrust force is created. The forces acting on the turbine assembly act to push it away from the upstream anchor point and, as the anchor point and line lengths are fixed, this creates a moment around the anchor point and the assembly will experience load pushing it in the direction of an arc prescribed by the mooring line length and the anchor point. Thus, the uplift force provided must be sufficient to overcome these forces acting to push the assembly downwards. That is to say, the buoyancy, or uplift force, must be greater than the downward components of the combined drag and thrust forces. In addition, the impact of the additional velocities induced by turbulence and the accelerations, both horizontal and vertical, induced by waves must be considered. The dynamic hydrodynamic forces induced on the structure have both drag and added mass components. The total amount of variable buoyancy may be sized to provide sufficient uplift to react to the combination of all of these described loads and maintain tension in the mooring lines in operational conditions.

The submersible turbine assembly can comprise a frame sized and configured for supporting one or more flowing water driven turbines. The assembly can be located at a predetermined depth range below the surface of a water body, such as a sea or river, where the water body has a bed. The frame includes at least one fixed buoyancy component and at least one variable buoyancy component. Optionally the frame can also include one or more hydrodynamic lift-generating surfaces. The one or more flowing water driven turbines are expected to produce a drag force which varies with water velocity, the assembly being arranged to be maintained in a predetermined position above the water body bed and submerged below the expected water body surface by at least two upstream taut mooring line runs and at least one downstream taut mooring line run, wherein the mooring line runs are arranged to be anchored to the water body bed at respective anchor points spaced apart from a point below the expected position of the assembly by at least the height of the assembly above the water bed, the frame having attachment points for said taut mooring line runs comprising upper and lower attachment points for spaced apart attachment of upper and lower or primary and secondary mooring lines or cables forming each mooring line run, the attachment points arranged to permit movement of at least some of the mooring lines relative to the frame during installation and having an arrangement for locking the mooring lines relative to the frame during use, the assembly being arranged so that in use in a water current having a nominal flow velocity of 3 metres per second both the upstream and downstream mooring line runs remain taut and wherein the net upward force resulting from the fixed and variable buoyancy and any hydrodynamic lift minus the weight of the assembly is at least 25% of the drag on the structure and thrust produced by the at least one turbine.

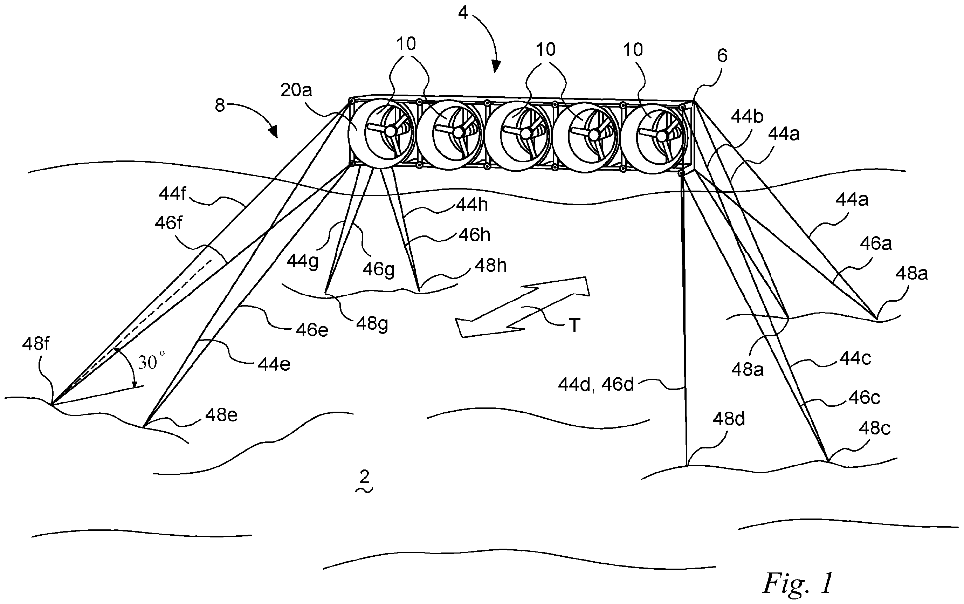

Referring to Figure 1, there is shown a sea bed 2 in a region of the sea where water flows in two directions due to tidal forces. Submerged in the water is a modular turbine assembly 4 which is for converting the kinetic energy of the flowing water into electrical energy and delivering it to a facility located on shore or offshore. The turbine assembly comprises a turbine support 6 which is positively buoyant in water and which is anchored to the sea bed by an anchoring system 8. The turbine assembly 4 has an array of five turbine modules 10 arranged in a line in the turbine support 6. Each turbine module 10 is positively buoyant in water. Each turbine module 10 is detachably docked to the turbine support 6. The combined positive buoyancy of the turbine support 6 and the five turbine modules 10 has an upward force which constrains against the downward force of an anchoring system 8.

As the turbine assembly of this embodiment is anchored at sea, a double-headed arrow T shows both directions in which the tidal forces cause the water to flow. The modular turbine assembly 4 is orientated with the array of five turbine modules 10 generally in line with arrow T so that as much water as possible flows through the turbine modules in a straight path.

The turbine assembly 4 is described as modular because the turbine modules 10 are interchangeable with each other and are docked to the in the support structure 6 in the same way.

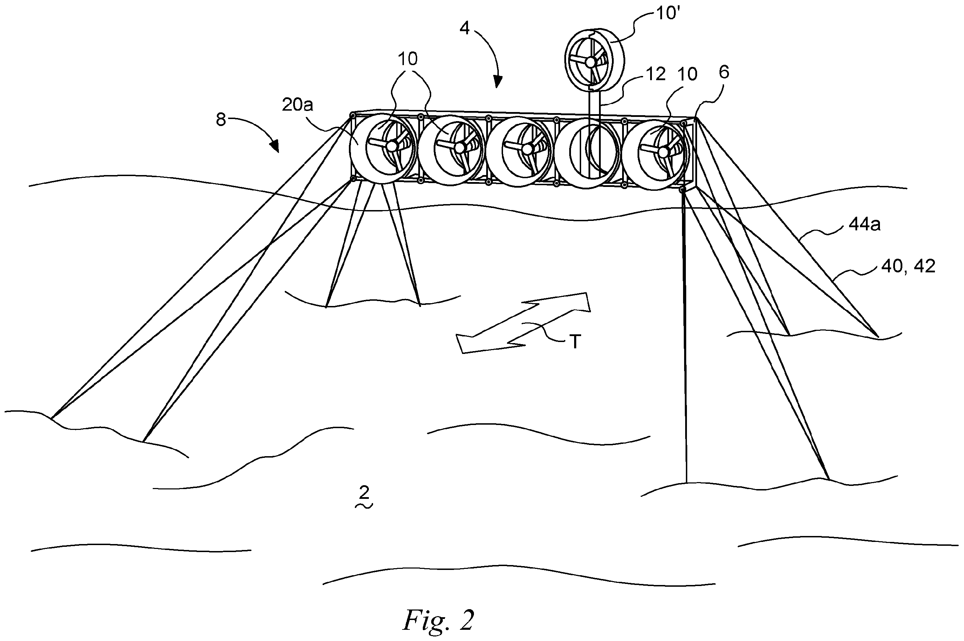

Referring to Figure 2, there is shown a turbine module 10' being pulled downward by a winch on the turbine support with two pull lines 12. The turbine module 10' docks with the turbine support 6. Once docked with the support structure, the turbine module 10' is anchored to the sea bed by the anchoring system unless, or until, at some time in the future the turbine module 10' is detached for maintenance, repair or replacement.

If, or when, maintenance, repair or replacement is required, the turbine module 10' is detached from the turbine support and allowed to float under its own inherent buoyancy in water to the surface. The assent of the turbine module 10' is controlled by the winch with two pull lines 12.

Alternatively, the winch with two pull lines can be substituted by a remote operated vehicle to perform the task of submerging the turbine module to dock with the turbine support. The remote operated vehicle can perform the task of controlled floatation of the turbine module to the surface too.

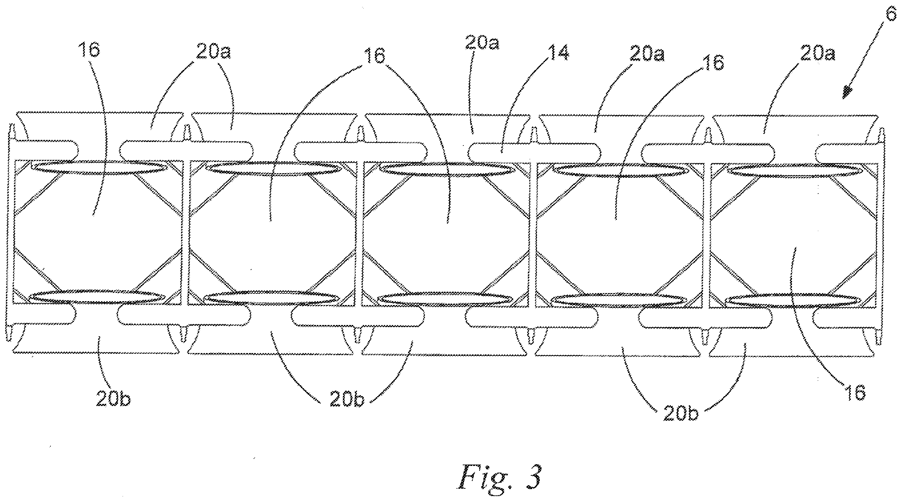

Referring to Figure 3, the turbine support 6 comprises a frame 14. The frame can be made of any material strong enough to support the turbine modules (i.e. steel, aluminium, fibre reinforced concrete, inflated material or composite). The frame has elements that are filled with buoyant material, or that are attached to buoyant material, to provide the positive buoyancy of the turbine support. The positive buoyancy may be adjusted by means of compressed air or buoyant gel or by another medium pumped from the surface or supplied by sub-sea reservoir. The positive buoyancy of the turbine support 6 is enough to be towed to the anchoring site.

The frame 14 is divided into five turbine module docking bays 16. Each docking bay 16 is accessible through the top of the frame to receive a respective turbine module 10. Each docking bay has a pair of flared annular sections 20a, 20b connected to the frame 14 of the turbine support 6. One flared annular section is located at each end of the docking bay. Each flared annular section tapers towards the docking bay.

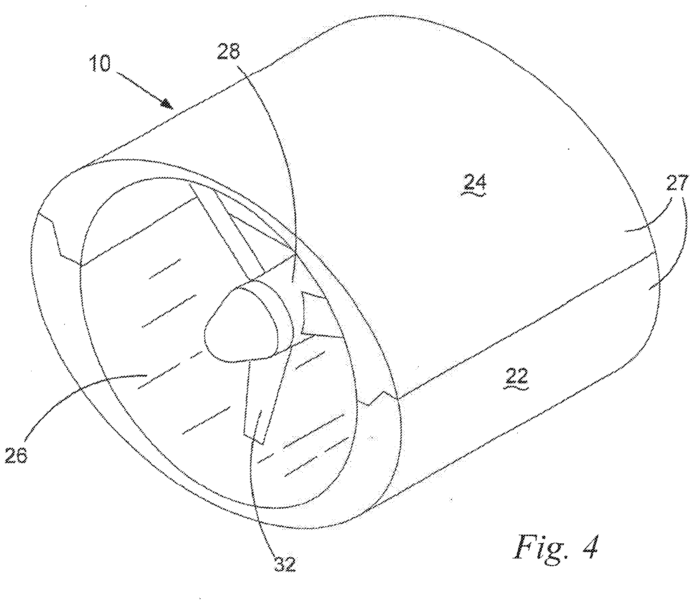

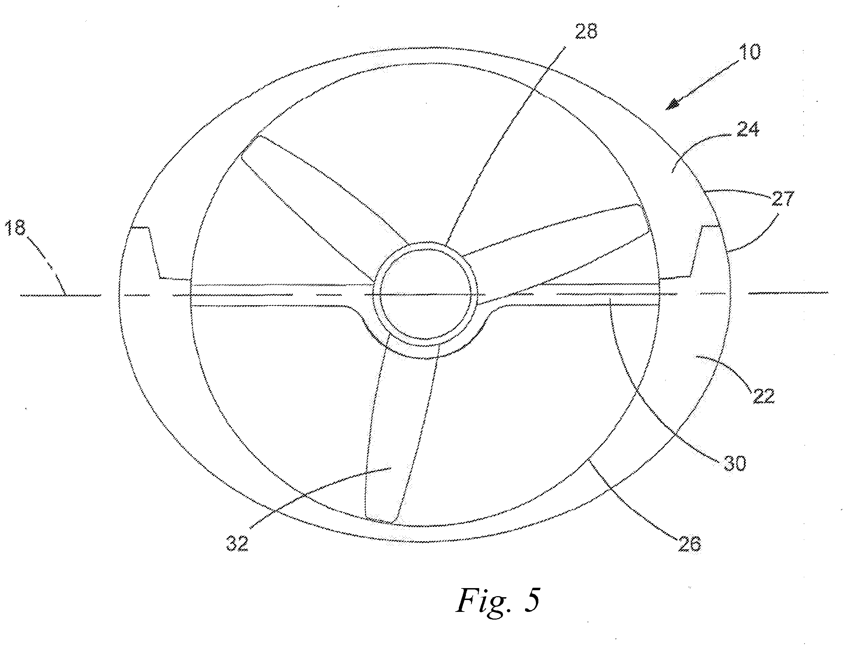

Referring to Figures 4 and 5, the turbine module 10 has a major body shell 22 and a minor body shell 24 joined to form a duct 26 which defines a hollow generally cylindrical bore. An external surface 27 of the joined minor and major body shells has a generally elliptical profile transverse the cylindrical bore of the duct. The body shells 22, 24 are filled with buoyant material (i.e. a fluid, solid or a combination of both), or are attached to buoyant material, to provide the positive buoyancy of the turbine module. The positive buoyancy of each turbine module 10 is enough to be towed to an anchoring site.

The turbine module 10 has a water-driveable horizontal axis turbine 28 mounted upon a bracket 30 inside the duct. The turbine has a rotor 32 co-axial with the duct. The rotor is matched to the diameter of the duct. The duct shields the turbine from turbulence caused by adjacent turbines so that the array of five turbine modules may be closely spaced. The turbine is driveable by water flowing in either direction through the duct and generates electrical power.

Returning to Figure 2 in more detail, each turbine module 10 is docked with a respective docking bay 16 in a complementary locating arrangement which automatically orientates a major axis 18 of the elliptical profile of the external surface 27 in a generally upright position in the turbine support 6 where the turbine module is locked in place by a locking mechanism. This reduces the horizontal cross-sectional area of the turbine module. As a result, the turbine module is streamlined to reduce interaction with upward or downward wave motion in the surrounding water.

Electrical connections between the turbine modules 10 and the turbine support 6 are made before or after docking. The electrical power generated by the turbines varies with water flow rate. Each turbine module has electrical power equipment (not shown) for conditioning the electrical power generated by the turbines. The turbine support has electrical power management equipment (not shown) for combining the conditioned electrical power from the five turbine modules. The turbine support's electrical power management equipment includes a step-up transformer (not shown) for transmission of the generated electrical power to a shore, or offshore, facility via a power cable 40. A communication cable 42 from the turbine assembly accompanies the power cable.

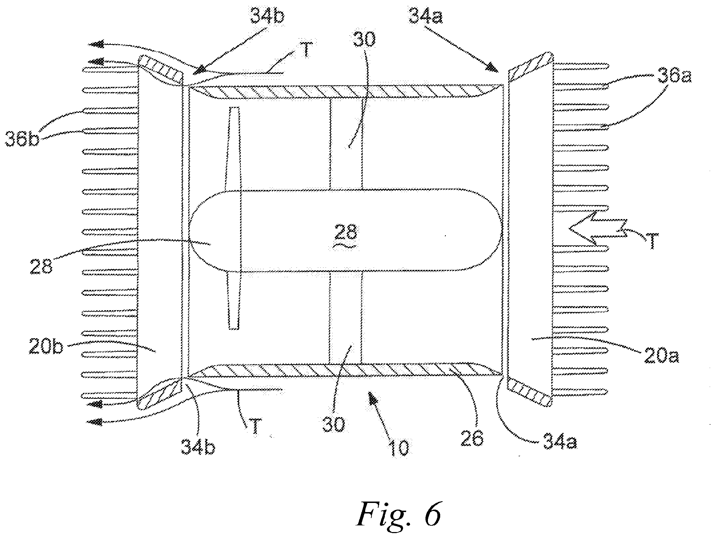

Referring to Figure 6, there is shown the duct 26 in fluid communication with the pair of flared annular sections 20a, 20b when one of the turbine modules 10 is docked in one of the docking bays 16 (not shown) of the turbine support 6 (not shown). The annular sections are suited for bi-directional water flow. Single headed arrow T indicates a direction of water flow which results in the up-flow annular section 20a performing the role of concentrator to scoop water into the duct and the down-flow annular section 20b performing the role of diffuser to emit water from the duct. This situation will be reversed when the tide changes and water flows through the duct in the opposite direction and arrow T is reversed (i.e. annular section 20b becomes the concentrator and annular section 20a becomes the diffuser).

The geometry of the annular sections 20a, 20b is matched to the water flow requirements of the turbine. The annular sections may be made of steel, aluminium, fibre reinforced concrete, inflated material or composite. The annular sections are connected may contribute the positive buoyancy of the turbine support.

The boundaries between the duct 26 and the flared annular sections 20a, 20b each have an annular gap 34a, 34b. The gaps enable water flowing outside the turbine module to enter the diffuser (i.e. the down-flow annular section 20b in this example) by venturi effect. This promotes water flow augmentation which reduces water eddies by re-establishing a boundary layer connection between water flow and the diffuser. A reduction in water eddies is beneficial because it reduces parasitic energy losses and drag.

The ends of the flared annular sections 20a, 20b facing away from the duct 26 are each equipped with an array of transverse vanes 36a, 36b. The vanes help prevent ingress of debris into the duct and help straighten the water flowing into the turbine 28. The vanes induce a rotational flow into the water flow to increase the energy extraction of the turbine.

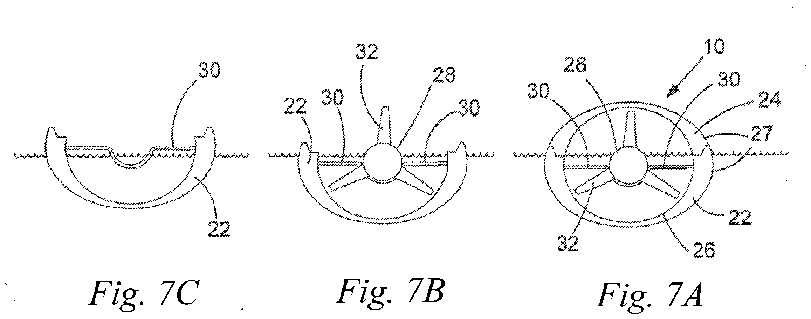

Referring to Figure 7A, the positive buoyancy of the turbine module 10 is localised about the major axis 18 of the elliptical external surface 27. As a result, the turbine module tends to float on the water surface with an increased horizontal cross-sectional area. This improves stability, and reduces the draft, of the turbine module when it is being towed at sea.

Referring to Figure 7B, the major body shell 22 has positive buoyancy to enable removal of the minor body shell 24 while the major body shell and the turbine 28 remain afloat. Removal of the minor body shell allows complete access to the turbine, and even removal of the turbine by floating crane, for the purpose of repair or maintenance to the turbine module, as is shown by Figure 7C.

Returning in more detail to Figure 1, the anchoring system 8 comprises eight pairs of anchoring cables 44a, 46a - 44h, 46h. Each pair of anchoring cables includes an upper anchoring cable 44 and a lower anchoring cable 46. Two pairs of anchoring cables are fixed to each corner edge of the frame 14 of the turbine support 6 (i.e. the upper anchoring cable of each pair is fixed to the corner edge above where the lower anchoring cable of each pair is fixed to the corner edge). The other ends of each pair of anchoring cables are permanently fixed to a respective anchor point 48a - 48h on the sea bed.

The anchoring cables 44a, 46a - 44h, 46h of each pair of anchoring cables converge from the frame 14 of the turbine support 6 to their respective anchoring points 48a - 48h. The mean angle of inclination of the anchoring cables of each pair of anchoring cables with respect to the horizontal is approximately 30 degrees.

The anchor points 48a - 48h are arranged about the turbine support 6 to suit the sea bed topography and to maintain the turbine support in a generally horizontal position. The anchor points cover a footprint greater in width and in length than the turbine support.

The upward force of the combined positive buoyancy of the turbine support 6 and the five turbine modules 10 cause tensile forces along the full length of the anchoring cables 44a, 46a - 44h, 46h.

The anchoring cables may be (high performance) synthetic rope, steel / wire rope, chain, solid metallic rod or solid composite rod.

The anchoring cables are equipped with vortex suppressants to reduce their hydrodynamic drag and reduce any vibration caused by water flow. For example, a vortex suppression system may be fibre or tape strands incorporated or attached to the anchoring cables. The fibre or tape strands stream with the water flow to form a fairing, or a hydrofoil. Rotating faired sections which fit over the anchoring cables and align with the water flow, spiral sections either fitted to or incorporated into the structure of the anchoring cable, or other proprietary vortex suppression systems are also suitable.

Returning to Figure 2, the power cable 40 and the communication cable 42 from the turbine assembly are incorporated within the upper anchoring cable 44a.

The modular turbine assembly is assembled at sea by towing the turbine support to an anchorage site, submerging it, and anchoring it to the sea bed with the anchoring system where it remains permanently. The five turbine modules are towed to the anchorage and submerged, each one in turn, to dock with the turbine support.

The following features each can be provided independently or may be combined.

A tethered sub-sea installation base which, when populated with devices, in itself comprises a small array of horizontal axis Tidal Energy Convertors (TECs). The base is for use at deep water sites (over 40msw) and enables the TECs to be positioned at the optimum depth dictated by the compromise between power output (strongest current found close to the surface, i.e. that having the fastest nominal flow velocity) and adverse structural and flow influences from wave interaction. Alternatively, the base may be used at shallower sites where it is submerged very close to, or even slightly protruding above (provided the TECs are submerged), the water surface.

As an integral part of the design a method is disclosed of installing and retrieving the TECs using buoyant modules into which individual TECs are loaded. The loaded modules are then towed to site and connected to the sub-sea base electrically and via a pull in line. The module is pulled sub-sea by the pull in line and interfaces with and locks into the sub-sea base.

An alternative to the above method, the buoyant modules may be driven to and retrieved from the PMSS by means of a Remote Operated Vehicle (ROV) specifically designed for the purpose and having the required thrust capability. This may include the use of variable buoyancy within the buoyant module to reduce the quantity of thrust required to drive the module subsea.

The turbine support may be a permanently installed buoyant subsea structure PMSS comprising:

• Structural space frame which may be of steel, aluminium or composite construction - the elements of which may be sealed to form pressure vessels, or may be filled with, surrounded by, or have attached buoyant material (including air or other gas) providing all or part of the buoyancy required to support the structure.

• 'Conical' diffuser and concentrator sections - the precise geometry of the concentrator and diffuser can be matched to the flow requirements of the TEC.

• The diffuser and concentrator sections can be suited to bi-directional flow

• The diffuser and concentrator sections can incorporate 'slots' to enable flow augmentation to re-establish boundary layer connection within the diffuser.

• The diffuser and concentrator sections may be constructed from steel, aluminium, fibre reinforced concrete, inflated material (i.e. 'hyperlon' or similar), composite (i.e. glass or other fibre reinforced plastic).

• The diffuser and concentrator sections may contribute to the buoyancy of the PMSS

• Buoyancy of the PMSS may be adjustable by means of compressed air or buoyant gel or other medium pumped from the surface or supplied from a subsea reservoir.

• Step up transformer for transmission of generated electrical power to shore or offshore processing facility via power cable.

• Power conditioning and switching equipment as required to combine and transmit the output of one or more tidal energy convertors as electrical power.

The anchoring system is a tension spread mooring system (TSM)

• Sea-bed fixing points which may be drag anchors; gravity anchors; suction piles; pinned template structures; attachment to sub-sea geographical features;

• Tension members which may be high performance synthetic rope such as UHMwPE (i.e. dyneema); steel / wire rope; chain; solid metallic rod (i.e. nitronic 50; 17-4pH; 316 stainless steel etc.)

• Vortex Induced Vibration (VIV) suppression system which may be fibre or tape strands incorporated or attached to the tension member which streams with the flow to form a fairing ('hairy' or 'ribbon' fairing); Rotating faired sections which fit over the tension member and align with the flow; Spiral sections either fitted to or incorporated into the structure of the tension member, or other proprietary vortex suppression system.

• Power transmission cable incorporating power conductors and communications (i.e. fibre optic or conventional signal pair conductors)

• The power transmission and communication cables may be incorporated into one or more of the tension members (i.e. the structural cable casing may act as tension member(s)).

The turbine module is a buoyant module (BM)

• Parallel annular duct matched to TEC to reduce the effects of off axis flow and wave interaction by straightening and aligning current flow with the TEC axis.

- Once installed the BM Integrates with the 'conical' diffuser and concentrator sections (which form part of the PMSS) to enhance performance over that achievable in open ocean conditions.

- BM's installed into the subsea structure by sub-sea pull in lines, buoyancy control or a combination of the two.

- The BM has an elliptical (or otherwise non-circular) distribution of volume to reduce the horizontal area presented to wave motions, and to give stability when on the surface.

- The BM can contain power conditioning equipment as required for each individual TEC to enable the power produced to be fed to the centralised step up transformer for onward transmission.

- The BM can be split to allow installation of the TEC by means of overhead crane. This minimises the crane capacity required.

Power for sub-sea operations:

Power to drive the subsea winches may be provided by equipment permanently or temporarily fitted to the subsea structure, or may be provided by means of an umbilical connection from a surface ship, or by specially equipped Remote Operated Vehicle (ROV).

Protection against object ingress. Vanes on the concentrator and diffuser may provide some or all of the following functions:

- Prevent the ingress of marine fauna, flora and flotsam/debris
- Guide objects clear of the duct and sub-sea structure
- Further straighten the flow into the turbine blades
- Induce counter rotational flow into the water stream to increase the energy extraction potential.

The vanes are not a fundamental part of the design but may have significant efficiency benefits if considered as part of the turbine design as it may allow significantly higher rotor speeds and therefore lighter, lower cost generators. The design of the vanes may simply look similar to two traditional 'cow catchers', mirrored and joined on the centre-line to form an inlet guard - one such unit at each end to catch and guide any objects clear of the inlet to the turbine duct.

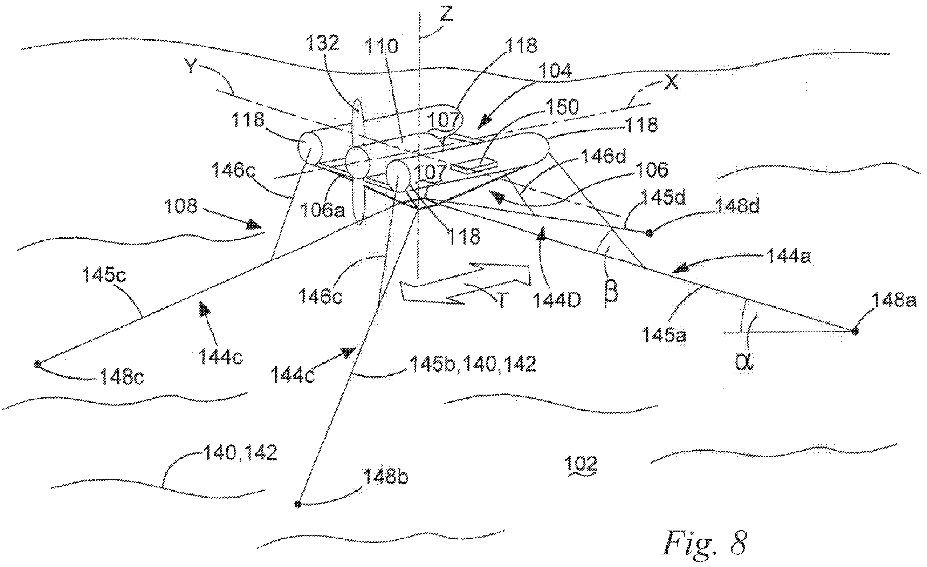

Referring to Figure 8, there is shown a sea bed 102 in a region of the sea where water flows in two directions due to tidal forces. Submerged in the water is a turbine assembly 104 which is for converting the kinetic energy of the flowing water into electrical energy and delivering it to a facility located on shore or offshore. The turbine assembly comprises a turbine support 106 which is anchored to the sea bed by an anchoring system 108. The turbine assembly 104 has a single turbine 110 secured to the turbine support 106. The turbine support 106 comprises a frame 106a and a pair of buoyancy devices 107 located at opposite ends of the frame 106a for stability.

The turbine 110 is secured to the frame 106a between the buoyancy devices 107. The turbine is located approximately midway between the buoyancy devices to minimise instability about the X axis of the turbine assembly which passes through the central axis of the turbine. Optionally, the turbine 110 may be detachable and interchangeable with other turbines.

The turbine support 106 has positive buoyancy in water which is variable by virtue of the buoyancy devices 107, as is explained in more detail below. Optionally, the turbine 110 may have variable positive buoyancy in water. The combined positive buoyancy of the turbine assembly 104 in water has an upward force which constrains against the downward force of the anchoring system 108.

As the turbine assembly of this embodiment is anchored at sea, a double-headed arrow T shows both directions in which the tidal forces cause the water to flow. The turbine assembly 104 is orientated with axis X through the turbine 110 generally in line with arrow T so that as much water as possible flows through the turbine in a straight path. The buoyancy devices 107 are streamlined and elongate in the direction of axis X of the turbine assembly to minimise hydrodynamic resistance to water current flowing in line with arrow T.

The transverse cross section of the buoyancy devices are shaped so as to reduce wave induced motion. The upper part of the buoyancy devices are streamlined, and the lower parts are bluff shaped so that, in addition to any resistance to motion provided by the buoyancy or the anchoring, the hydrodynamic drag force associated with moving the buoyancy device downward through the water is greater than the hydrodynamic drag force associated with moving the buoyancy device upward through the water. Thus, the buoyancy device is shaped so that, when in use it is positioned on the turbine assembly, it is broader about its base than about its apex, and the upward facing surfaces of the buoyancy device are more closely aligned with the vertical than the downward facing surfaces.

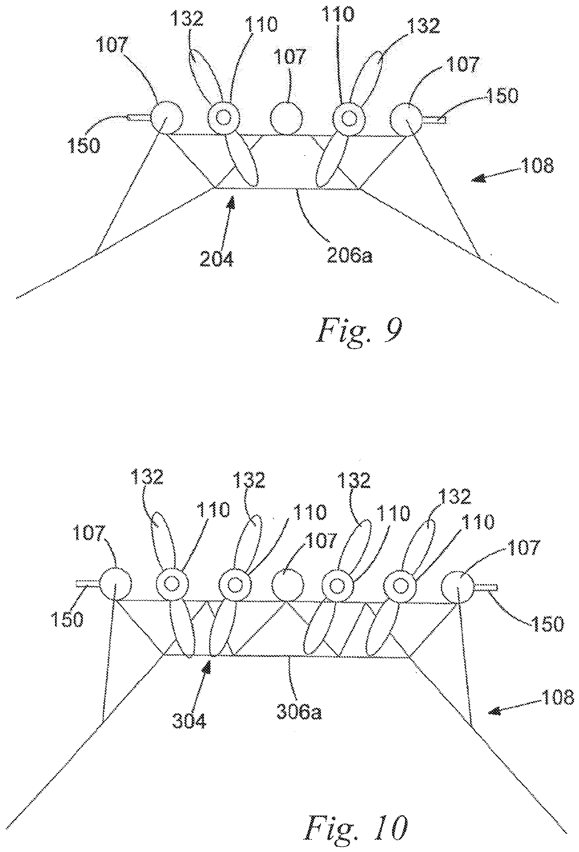

Referring to Figure 9, there is shown a first alternative turbine assembly 204 which comprises a turbine support 206 similar to the turbine support 106 mentioned above albeit having two turbines 110 secured to the turbine support 206. The turbine support 206 comprises a frame 206a and three buoyancy devices 107, two located at opposite ends of the frame 206a for stability and a third buoyancy device 107 in the middle of the frame 206a for additional buoyancy. The turbines 110 are secured to the frame, one turbine in each gap between the buoyancy tanks. The turbines are located approximately midway between the buoyancy devices to minimise instability about the X axis.

Referring to Figure 10, there is shown a second alternative turbine assembly 304 which comprises a turbine support 306 similar to the turbine supports 106, 206 mentioned above albeit having four turbines 110 secured to the turbine support 306. The turbine support 306 comprises a frame 306a and three buoyancy devices 107, two located at opposite ends of the frame 306a for stability and a third buoyancy device 107 in the middle of the frame 306a for additional buoyancy. The turbines 110 are secured to the frame, two turbines in each gap between the buoyancy tanks. The centre of gravity of each pair of turbines is located approximately midway between the buoyancy devices to minimise instability about the X axis.

Referring to Figures 8 to 10, the frame 106a, 206a, 306a of the turbine support can be made of any material strong enough to support the turbine or turbines 110 (i.e. steel, aluminium, fibre reinforced concrete, inflated material or composite).

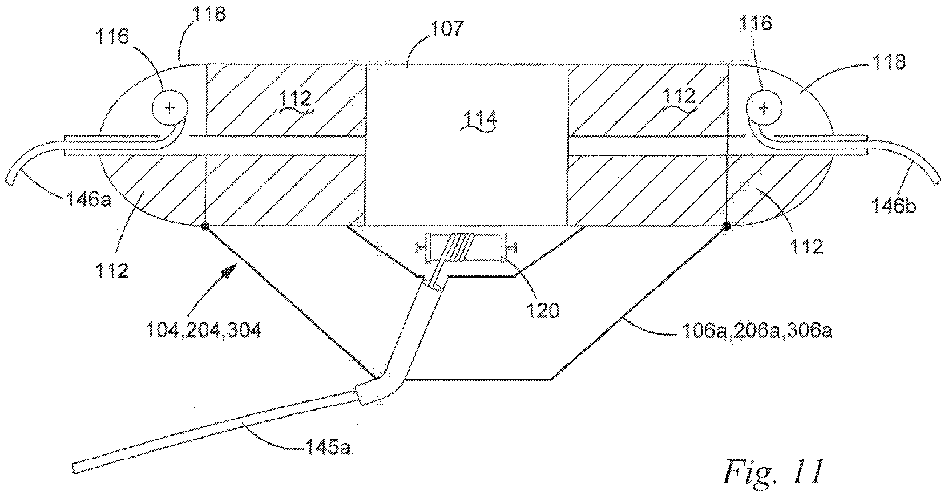

Referring to Figure 11, the buoyancy devices 107 are secured to the frame 1006a, 206a, 306a. Each buoyancy device comprises a fixed buoyant material 112, such as foam, at opposite ends of the buoyancy device and a ballast tank 114 located in between the fixed buoyant material. The buoyancy of the turbine support may be adjusted by filling the ballast tank with water to reduce positive buoyancy. Reduced positive buoyancy may be desirable to reduce the force required to submerge the turbine assembly during its installation at a target location. The buoyancy of the turbine support may also be adjusted by emptying the water from the ballast tank and replacing it with air to increase positive buoyancy. Increased positive buoyancy may be desirable to make it easier to tow the turbine assembly to the anchoring site. The air may be compressed air stored on the turbine support. Alternatively, buoyant gel may be used or by another buoyancy medium pumped from the surface or supplied by sub-sea reservoir. The ballast tank 114 is located midway between equal amounts of fixed buoyant material 112 to minimise instability about the Y axis of the turbine assembly when the buoyancy of the ballast tank is being varied.

Figure 11 shows a cross-section through one buoyancy device 107 secured at an upper and lower attachment points, at an end of the turbine support 106, 206, 306 and it shows parts of the frame 106a, 206a, 306a equipped with a tag line winch 116 and a mooring line winch 118. There is shown a tag line winch at each nose end 120 of the buoyancy device. Each nose end 120 is partially formed of fixed buoyant material 112 and has a fairing which covers the tag line winch. There is also shown a mooring line winch underneath the water ballast tank. The purpose of the winches is explained in more detail below. The upper and lower attachment points can be located at any suitable place on the body of the turbine assembly.

Returning to Figure 8, the turbine 110 has an elongate generally cylindrical body shell 122 coaxial with axis X to minimise hydrodynamic drag. As mentioned above, the turbine may have positive buoyancy and, if so, the body shell 122 is filled with buoyant material (i.e. a fluid, solid or a combination of both), or is attached to buoyant material.

The turbine 110 is a water-driveable horizontal axis turbine with a rotor 132 having two rotor blades. The rotor may have three of more rotor blades. The rotor diameter is typically 16m for a 1MW turbine although the rotor diameter may range from 2 metres for a 50kW turbine, 6 metres for a 200kW turbine and 20 metres for a 2MW turbine. The turbine shown in Figure 1 is not ducted, although as duct may be fitted around the rotor to shield the turbine from turbulence caused by any adjacent turbines or wave action and to increase efficiency of energy extraction from the water current. For example, the rotor 132 of the turbine 110 may be located in a duct in fluid communication with a concentrator at one end of the duct and a diffuser at the other end of the duct, like the duct 26 and the pair of flared annular sections 20a, 20b shown in Figure 6. The turbine 110 is driveable by water flowing in either direction through the rotor 132 and generates electrical power.

Electrical connections between the turbine 110 and the turbine support 106, 206, 306 are made when the turbine is secured to the turbine support. The electrical power generated by the turbines varies with water flow rate. Each turbine has electrical power equipment (not shown) for conditioning the electrical power generated by the turbines. The turbine support has electrical power management equipment (not shown) for combining the conditioned electrical power from the turbine or turbines. The turbine support's electrical power management equipment includes a step-up transformer (not shown) for transmission of the generated electrical power to a shore, or offshore, facility via a power cable 140. A communication cable 142 from the turbine assembly accompanies the power cable.

The anchoring system 108 comprises four anchoring cables 144a - 144d. Each anchoring cables comprises a mooring line 145a - 145d and a tag line 146a - 146d branching from the mooring line at an intermediate point along the mooring line. One end of the mooring line of each anchoring cable is connected to its nearest lower corner of the turbine frame 106a, 206a, 306a. The mooring lines are connected below the centre of buoyancy of the turbine assembly to maintain stable pitch and roll attitude. The tag line of each anchoring cable is connected to the turbine frame at the nearest nose end 120 of its nearest buoyancy device 106a, 206a, 306a (i.e. the tag line of each anchoring cable is connected to a corner of the frame end approximately above the corner of the frame where the mooring line is connected in the direction of upward force of the positive buoyancy). As such, an end of the tag and mooring lines of an anchoring cable are connected to each corner of the frame. The tag lines need not be attached at the corners, and may be arranged at some point beneath the buoyancy device away from its nose or tail.

The other opposite end of each mooring line is permanently attached to a respective anchor point 148a - 148d on the sea bed. The power cable 140 and the communication cable 142 from the turbine assembly are incorporated within the mooring line 145b.

The anchoring cables 144a - 144d diverge outwardly from turbine support to the water bed. The mooring lines 145a - 145d under tension form the edges of a substantially pyramidal shape on the sea bed. The mean angle of inclination $\alpha$ of the mooring line of each anchoring cable with respect to the horizontal is approximately 25 degrees. The mean angle of inclination $\beta$ of the tag line of each anchoring cable with respect to the mooring line is approximately 15 degrees.

The anchor points 148a - 148d are arranged about the turbine support 106, 206, 306 to suit the sea bed topography and to maintain the turbine support in a generally horizontal position. The footprint of the anchoring system upon the sea bed, as defined by where the mooring lines of the anchoring cables are attached to the anchoring points 148a - 148d, is greater in width and in length than the turbine support. The enlarged footprint improves the stability of the turbine assembly.

The upward force of the positive buoyancy of the turbine assembly 104, 204, 304 causes tensile forces along the full length of the anchoring cables 144a - 144d. The turbine assembly 104, 204, 304 anchored by the anchoring system 108 typically has an operational depth in the top third of water column where power extraction from water current, i.e. the nominal flow velocity of the water, is optimal. The turbine assembly may be arranged to float submerged at a depth of at least 5m or 7.5m beneath the surface, and/or to float submerged at a depth selected so that the vertical wave particle velocities do not exceed 1 metre per second more than 5% of the time.

This is unlike traditional anchoring systems, such as gravity anchors or columns driven into sea bed, which have an operation depth in the bottom third of water column where power extraction from water current is sub-optimal because the nominal flow velocity of the water currents are slower down there.

The fixed buoyant material 112 of the buoyancy devices 107 has sufficient positive buoyancy in water at the operational depth with zero water current and wave loading when the turbine assembly 104, 204, 304 is anchored to the sea bed by the anchoring system 108. A variable component of positive buoyancy is additionally required to provide sufficient upward force to counteract the drag moment around the anchor points 148a - 148d created by longitudinal drag caused by current flow and longitudinal and horizontal wave particle velocities. Water current nominal flow velocity, interchangeably referred to as water current speed, can vary between 0m/s (calm) and 8m/s (storm conditions) and the optimal water current speed for peak power output from the turbines 110 is about 2.5m/s. The mean water current speed at any particular site depends on factors such as depth of water column, location of turbine assembly and the bathymetry of the sea bed. The variable component of positive buoyancy provided by the ballast tanks 114 can either be varied (i.e. by emptying of ballast tanks of water and filling them with air) upon installation of the turbine assembly at site and then be constant for its operational life or it can be varied during its operational life if required. Additionally or alternatively, the variable positive buoyancy can be supplemented throughout the tidal cycle by hydrodynamic upward force. Hydrodynamic upward force may be provided by hydrofoils, or fins, secured to the turbine support 106a, 206a, 306a. Referring to Figures 8 to 10, there is shown hydrofoils 150 protruding outwardly from the ballast tanks 114. The positive buoyancy and hydrodynamic upward force required to counteract the drag moment around the anchoring points is proportional to the maximum water current speed experienced by the turbine assembly. The hydrofoils 150 are shaped to increase upward force with increasing water current and, in doing so, provide increasing counteraction to the drag moment around the anchor points caused by increasing longitudinal drag and maintain the turbine assembly at the desired elevation above the sea bed.

In normal operating conditions, excursion of the turbine assembly may be about +/- 2 metres in both the horizontal and vertical planes. In storm conditions, excursion of the turbine assembly may be about +/- 10 metres in both the horizontal and vertical planes.

In practice, we have found that the proportion of the variable upward force divided by the total upward force (fixed and variable) of the turbine assembly should be 10% to 20% of the figure (expressed as metres/second) of the maximum current flow speed in line with the turbine assembly. Likewise, we have found that the proportion of the variable upward force divided by the total weight of the turbine assembly should be 20% to 30% of the figure (expressed as metres/second) maximum current flow speed in line with the turbine assembly.

The tag lines 146a - 146d and the mooring lines 145a - 145d of the anchoring cables may be ropes made of nylon, polypropylene and/or high performance polyethylene materials or the anchoring cables may be steel / wire rope, chain, solid metallic rod or solid composite rod. The tag lines are made of different material to the mooring lines and the tag lines have a greater elasticity than the mooring lines. Thus, the mooring lines are to constrain the turbine assembly against the upward force of the positive buoyancy of the turbine assembly. The tag lines are to provide directional support to counteract pitch, roll or yaw movement of the turbine assembly 104, 204, 304 about the X, Y and Z axes. The tag lines have integral resistance to shock in the event of sudden movement of the turbine assembly. Additional resistance to shock may be provided by dampers connected in series or in parallel with one or more of the tag lines.

Returning to Figure 11, each tag line 146a - 146d is connected to a respective tag line winch 116 and each mooring line 145a - 145d is connected to a respective mooring line winch 118. The winches 116, 118 are operable to vary the length of the tag lines and the mooring lines. The winches are used to submerge the turbine assembly 104, 204, 304 from the water surface to its target operational depth as is explained in more detail below. Additionally, the winches may be used to adjust the orientation of the turbine assembly about the X, Y and Z axes and, in doing so, orientate it in the optimal direction when anchored to the sea bed. The winches are externally activated, typically by a remote operated vehicle, although the winches may be activated by their own electric motor. Each winch is ratcheted to lock it against unintentional release of the tag lines and mooring lines under tension. The frame 106a, 206a, 306a of the turbine assembly is equipped with the tag line and mooring line winches, but the skilled person will understand that the winches may be installed on the anchoring system, such as near or at the anchoring points 148a - 148d.

In addition, the winches may be arranged in only one of the buoyancy devices, with points of attachment for pull lines distributed about the turbine assembly. In this way

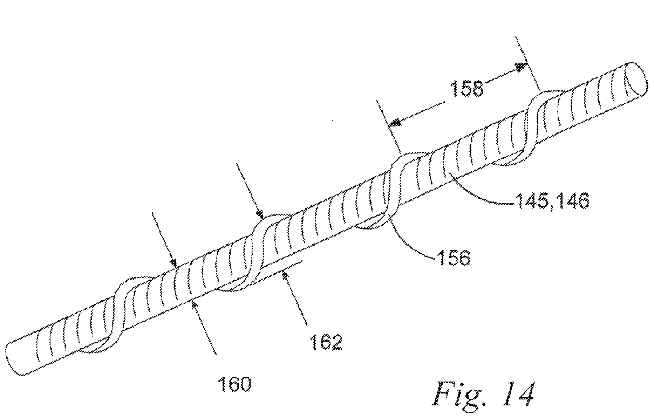

Referring to Figure 14, there is shown the mooring line 145a of anchoring cable 144a where it is connected to the anchoring point 148a. The anchoring point protrudes from in a hole drilled 15 metres into the sea bed at an angle $\alpha$ of approximately 25 degrees to the horizontal. The drilling operation may be performed by a remote operate vehicle deployed upon the sea bed. Approximately the bottom ten metres of the hole are in bed rock 150 and approximately the top five metres of the hole (including the open mouth of the hole) are in weathered rock 152. The diameter of the hole is approximately 0.25m into which a single or multiple tendon anchor 154a is installed and grouted. The anchoring point 148a is on the exposed end of the anchor 154a and the mooring line is connected thereto. Once the grout has hardened tension may be applied to the mooring line.

The mooring lines 145a - 145d and the tag lines 146a - 146d of the anchoring cables are equipped with vortex suppressants to reduce their hydrodynamic drag and reduce any vibration caused by water flowing past them. The vortex suppressant comprises a helical protrusion 156 arranged about the circumference of each line and woven into or bonded to the strands of the rope material used to make the line. The helical protrusion has a pitch 158 of approximately twelve times the diameter 160 of the line, although a pitch 158 falling within the range of four to sixteen times the diameter 160 of the line can be used. The helical protrusion has an outer diameter 162 of approximately 150% of the diameter of the line, although an outer diameter 162 falling within the range of 110% to 200% times the diameter 160 of the line can be used.

The helical protrusion 156 is applied to the rope of the mooring line 145a - 145d or tag line 146a - 146d by one or more of the following methods:

a) Arranging the weave of the material used to make the rope so that a helix is generated which is more pronounced than the other windings, and displays the characteristics of the pitch ratio described above;

b) Additional materials may be added during the production of the rope to bulk out the rope to form the helix. The bulking material may the same material as the rope or a rigid section of thermoplastic material pre-formed as a helix and bonded to the rope; and/or

c) An outside cover that is either wrapped or whipped around the rope with parts woven in for continuity at various points. Materials could be the same as the core rope or the others listed above.

Other possible vortex suppressants include fibre or tape strands incorporated or attached to the anchoring cables. The fibre or tape strands stream with the water flow to form a fairing, or a hydrofoil. Rotating faired sections which fit over the anchoring cables and align with the water flow, spiral sections either fitted to or incorporated into the structure of the anchoring cable, or other proprietary vortex suppression systems are also suitable.

The floating turbine assembly 104, 204, 304 is initially assembled in harbour whence it is towed to an anchorage site where four anchoring points 148a - 148d have been fixed to the sea bed. The mooring lines 145a - 145d and the tag lines 146a - 146d of the anchoring cables 144a - 144d are unwound from their respective winches 116, 118 and are submerged towards the sea bed. The free ends of the mooring lines are fixed to respective anchoring points. The variable positive buoyancy is reduced by filling the ballast tanks 114 with water. The winches are turned slowly to wind up the tag lines and mooring lines. The winches are operated by remote operated vehicle. The turbine assembly is steadily submerged to its operational depth. The ballast tanks are re-filled with air upon arrival at the operational depth. This increases positive buoyancy so that the turbine assembly is anchored to the sea bed by the anchoring system 108 with tensile forces in the mooring lines and the tag lines.

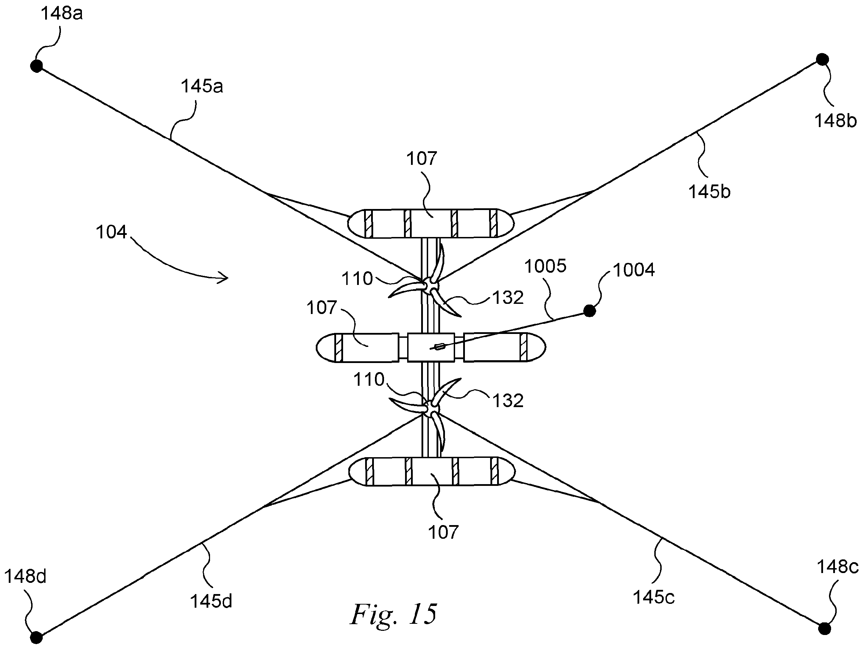

Referring to Figure 15, there is shown a floating turbine assembly 104 with two turbines 110 having rotors 132 oriented facing the surface of the water, i.e. in an upright orientation, and three buoyancy devices 107. The floating turbine assembly 104 is tethered using an anchoring system having four mooring lines 145a, b, c & d attached at four anchoring points 148a, b, c & d fixed to the sea bed. The floating turbine assembly 104 also has a buoy 1004 connected to the central buoyancy device 107 with buoy line 1005. The turbines 110 and rotors 132 are in an upright orientation to prevent them from turning in the current and generating power, and in this position mechanical braking is also provided by the gearing in the turbines.

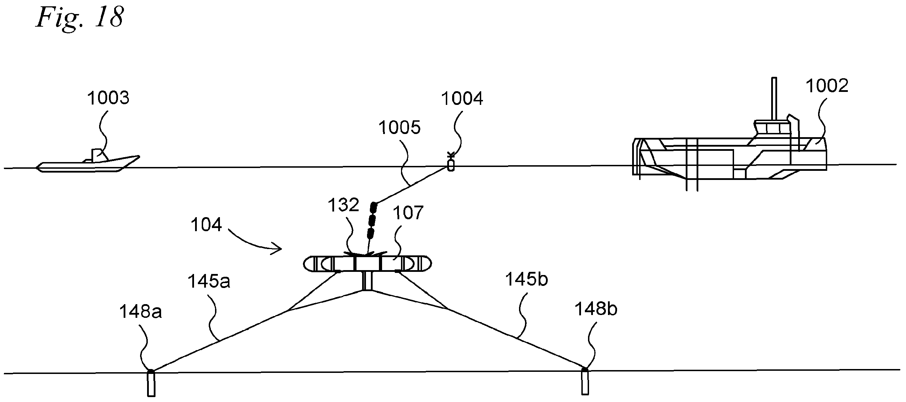

Referring briefly to Figure 18, support vessels 1003 and 1002 are shown arriving at the site where the floating turbine assembly 104 is installed. The vessels or personnel on board the vessels check the conditions and whether there is any local traffic before beginning the retrieval of the floating turbine assembly 104. At this point, if the turbines 110 and rotors 132 are not in an upright orientation (and are still generating power), the turbines 110 and rotors 132 are oriented to face the surface of the water, i.e. upright, and power generation is stopped.

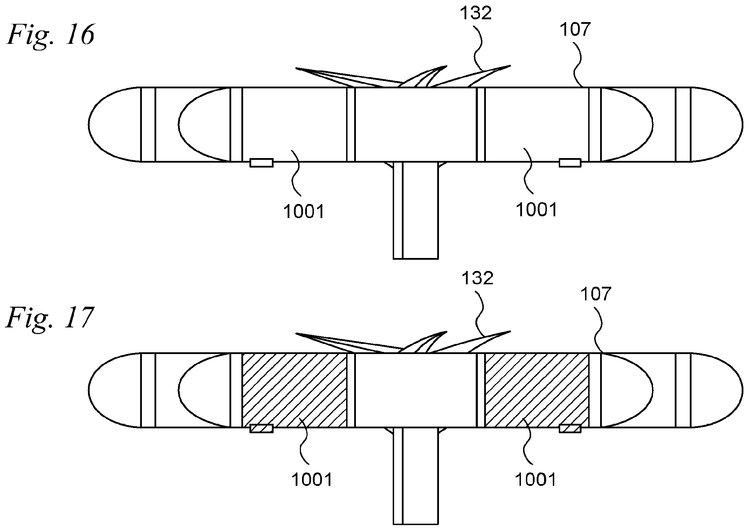

Referring now to Figure 16, the buoyancy devices 107 are shown with ballast tanks 1001. The rotor 132 is visible in an upright orientation. The ballast tanks 1001 in the buoyancy devices 107 are filled with air for normal operation, as described above, such that the floating turbine assembly 104 has sufficient variable positive buoyancy so the assembly 104 is anchored to the sea bed with a net positive buoyancy that causes the mooring lines in the anchoring system 108 to be under tension with tensile forces in all of the mooring lines.

Referring to Figure 17, the variable positive buoyancy of the floating turbine assembly 104 is reduced by filling the ballast tanks 1001 in the buoyancy devices 107 such that the tanks 1001 are fully flooded with water. The floating turbine assembly 104 is now ready to be raised to the surface.

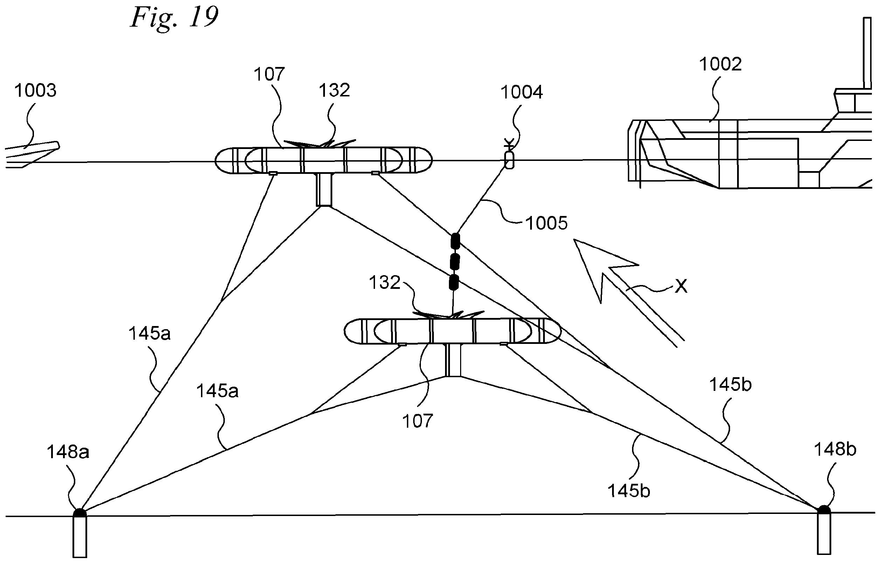

Referring back to Figure 18, the respective winches release the upstream upper and lower lines 145b,c, such that the floating turbine assembly 104 rises to the surface of the water as shown in Figure 19. Figure 19 shows arrow X, which indicates the direction of movement of the floating turbine assembly 104 to the water surface. The water in the ballast tanks 1001 can be expelled if required, for example using compressed air cylinders located on one of the vessels 1002, 1003.

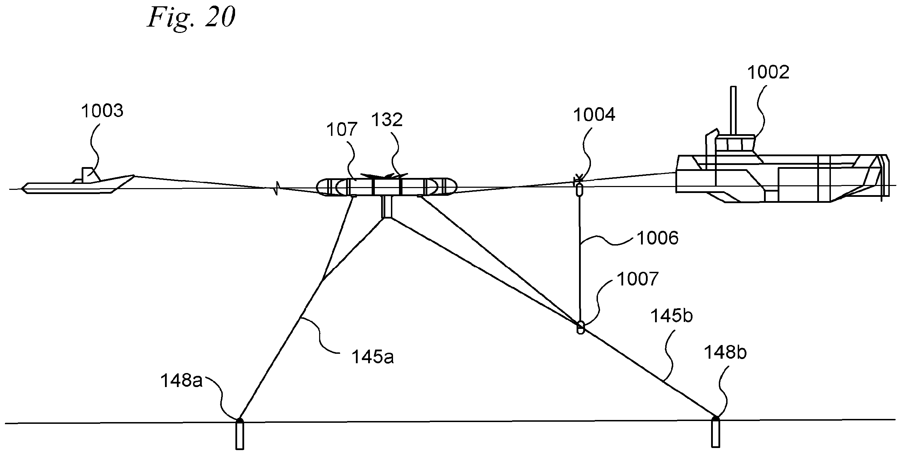

Figure 20 shows a diver 1007 diving from vessel 1002 to repair the broken line and replace it as required.

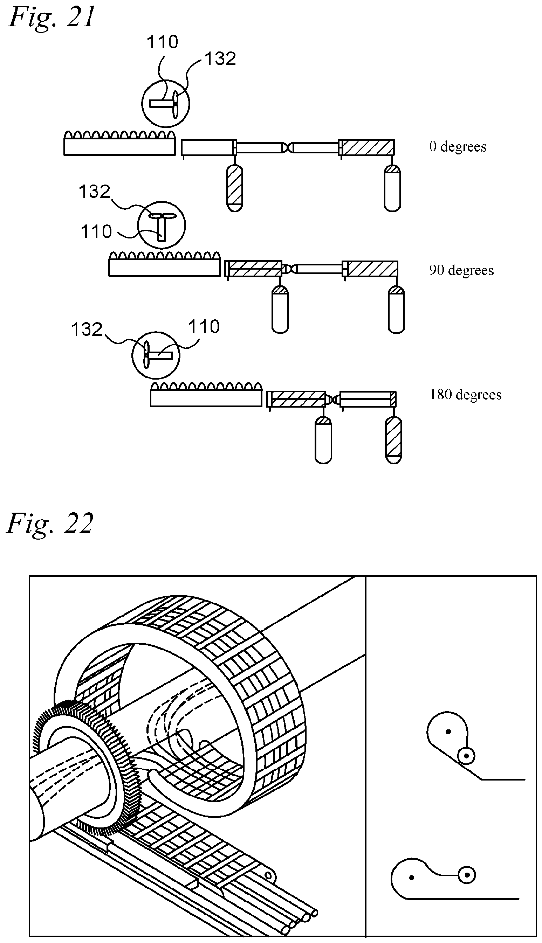

Figures 21 and 22 show more detail on the rotation mechanism for the turbines 110 and blades 132. Figure 21 shows a rack and pinion system at three different positions corresponding to the turbine being rotated to either 0 degrees, 90 degrees or 180 degrees. Figure 22 shows the rack and pinion system as it would be provided in the assembly. The arrangement is biased such that the turbine will default to the 90 degrees orientation, such that the turbine 110 and blades 132 will face upwards. The rack is mounted on a carriage, wherein the rack and carriage move on a track which is controlled by a first ram, the first ram also being mounted on a carriage, wherein the first ram and carriage is moved by a second ram which is fixed in position on the structure.

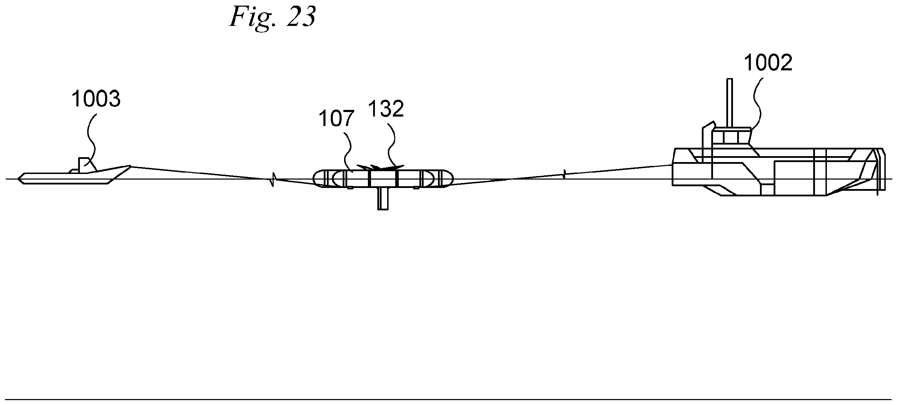

Figure 23 shows the floating turbine assembly 104 being towed by vessels 1003 and 1002 once detached from the sea bed. Towing bridles are secured between the floating turbine assembly 104 and the vessels 1003 and 1002.

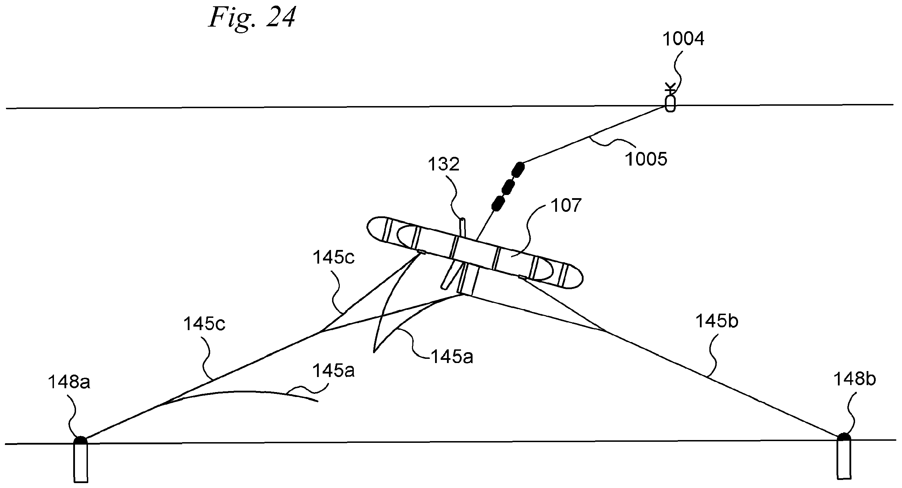

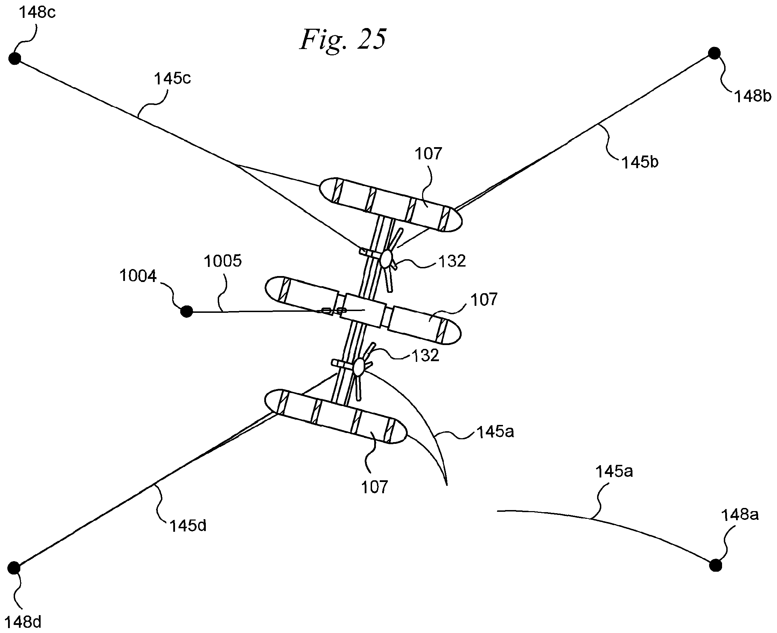

Referring to Figure 24, there is shown a floating turbine assembly 104 with two turbines 110 having rotors 132 oriented to generate power, i.e. facing into the direction of the current, and three buoyancy devices 107. The floating turbine assembly 104 is tethered using an anchoring system having four mooring lines 145a, b, c & d attached at four anchoring points 148a, b, c & d fixed to the sea bed but one of these mooring lines 145a is shown as having broken. The floating turbine assembly 104 also has a buoy 1004 connected to the central buoyancy device 107 with buoy line 1005. Figure 25 shows the same floating turbine assembly 104 from above, again showing mooring line 145a is broken.

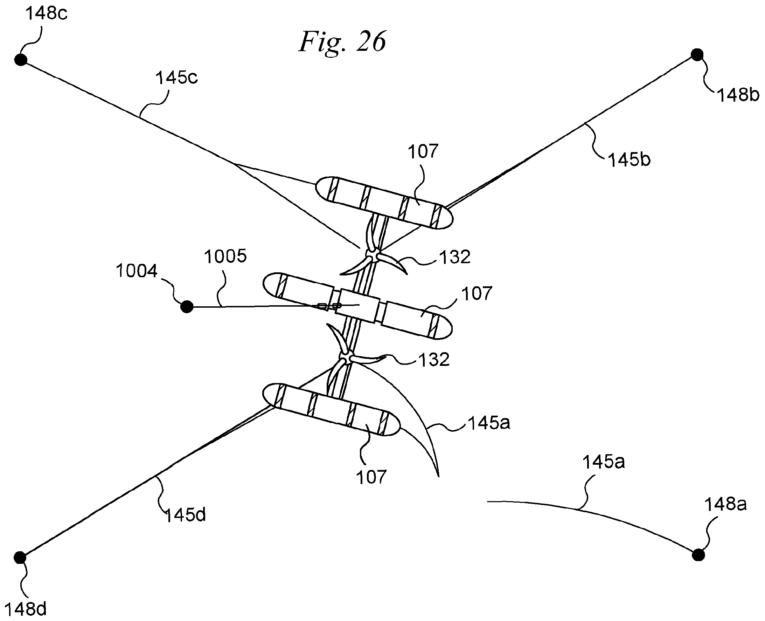

Referring now to Figure 26, the broken mooring line 145a is an upstream line as, of the mooring lines 145, the upstream lines have the highest probability of breaking since they undergo the most load. The turbines 110 and blades 132 are rotated to an upright orientation to stall the turbines 110, stop the generation of power and remove the thrust forces, reducing the overall load that the remaining mooring lines must react against. The turbines 110 are actuated by hydraulic rams that are biased into the upright orientation, requiring power to be applied in order to move the turbines 110 and blades 132 to face into the current. Thus if there is, for example, a power failure on board the floating turbine assembly 104 then the turbines 110 and blades 132 will move into an upright orientation. The floating turbine assembly 104 is then brought to the surface to enable support vessels and a diver to replace the broken mooring line 145a and re-submerge the floating turbine assembly 104.

In an alternative embodiment, the buoyancy tanks 1001 (see Figures 16 & 17) can be flooded to reduce the loads on the mooring lines 145.

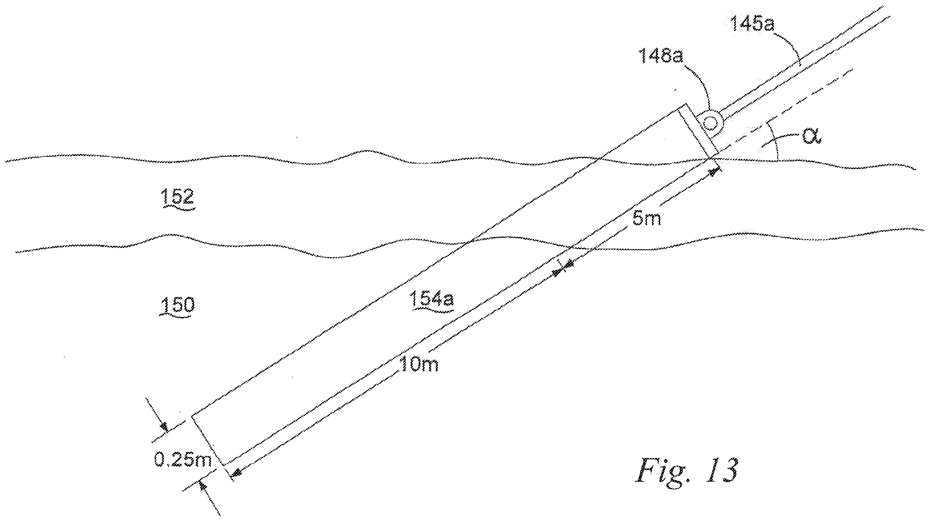

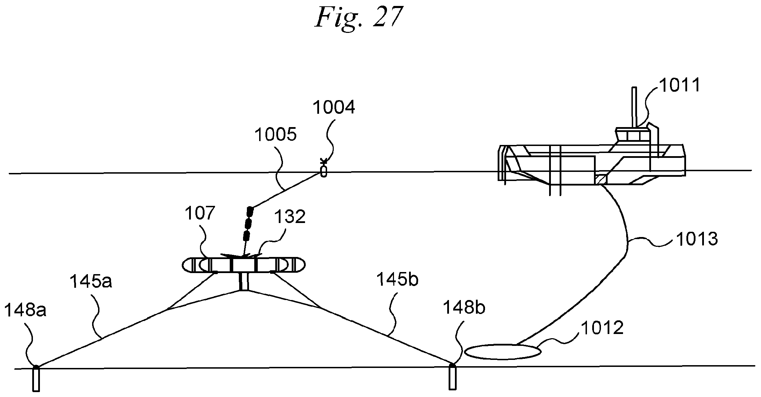

Figure 27 shows another aspect of the present invention where there are provided a remotely operated surface vessel 1011 and a submersible 1012. The submersible 1012 is tethered to the surface vessel 1011 so that the tether 1013 can be used to supply power to the submersible 1012 from the surface vessel 1011. The tether 1013 also provides a route for communication between the vessel 1011 and the submersible 1012 by incorporating a suitable cable, e.g. optical fibre, into the tether 1013 to allow direct communication. The submersible 1012 can be used to install anchor points into the sea bed 150 as for example in Figure 13. An advantage of using a combined unmanned surface vessel and tethered submersible is that the process of installing anchor points and other installation and maintenance work underwater then reduces or removes the need for divers.

The submersible 1012 can be a tracked vehicle that moves along the sea bed, or a frame that is deposited on the sea bed, or a submersible vehicle like a submarine.

The submersible can also perform functions such as (i) laying cables on the sea bed, for example for connecting the floating turbine assembly 104 to a power grid; (ii) securing cables to the sea bed, for example by laying concrete mattresses or using staples; (iii) making sub-sea electrical connections; (iv) inspecting various aspects of the apparatus underwater, for example the various devices, anchors or cables; (v) performing site surveys, for example performing geophysical or geotechnical surveys such as sub-bottom profiling or taking core samples of the sea bed; (vi) removal of debris, for example removing debris from a site prior to installation of anchors or cables.

Through the use of a tether, the complexity of the submersible 1012 is reduced as no power storage or generation needs to be located on-board the submersible 1012 and communication between the submersible 1012 and the surface vessel 1011 is simplified. Without a tether for communication, suitable underwater wireless communication needs to be provided with the associated difficulty and expense in doing so.

In addition, the surface vessel 1011 can also be controlled remotely, for example through a suitable wireless communications channel such as a mobile phone data connection or satellite communications link, While the surface vessel 1011 can be controlled remotely, a remote user is most concerned with controlling the submersible so the present invention provides that the surface vessel 1011 is configured by default to follow the submersible. As such, when the remote user moves the submersible 1012, the surface vessel is configured to move itself so that the submersible stays within communication range of the surface vessel. There are a variety of options for what the communication range is considered to be. As the submersible 1012 is tethered to the surface vessel, the maximum communication range is the maximum length of the tether. It is more likely that the communication range will be set to be shorter than the maximum length of the tether to prevent damage to the tether due to wear over time or through excess tension on the tether. It is likely, therefore, that a set of threshold values are to be used by the arrangement such that the threshold is set so that the surface vessel 1011 does not need to move too frequently, i.e. a minimum threshold for movement. It is also likely that a maximum threshold will be set to ensure that the tension in the tether does not exceed a predetermined value where this predetermined value is selected to reduce the likelihood of damage to the tether through excess tension in the tether.

To determine the communication range, either the surface vessel 1011 or submersible 1012 can be provided with a range determiner to determine the distance of the submersible 1012 from the surface vessel 1011. This range determiner can be some form of tension detection device configured to detect the tension in the tether 1013 such that, when the tension in the tether 1013 is detected to reach a predetermined maximum threshold, either the submersible 1012 has to stop moving away from the surface vessel 1011 or the surface vessel 1011 has to move to shorten the distance between the surface vessel 1011 and the submersible 1012. By shortening this distance, the tension on the tether 1013 should be decreased within tolerances and sufficiently below the thresholds for tension in the tether 1013.

Optionally, the surface vessel 1011 may be configured to orient itself, taking account for example the conditions at the water surface and in the vicinity of the vessel 1011 and tether 1013, to reduce the drag and/or tension in the tether 1013. This has the advantage of minimising the tension in the tether 1013 in normal operation, allowing a greater degree of flexibility and range for the submersible as the tether 1013 will suffer reduced tension from drag and/or tension caused by the surface vessel 1011.

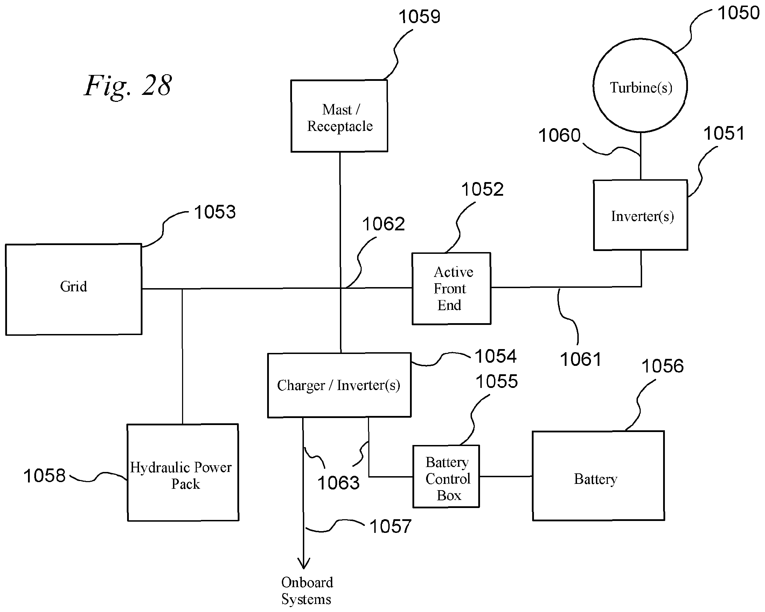

Referring now to Figure 28, another aspect of the present invention will be described in more detail. Figure 28 shows a simplified system diagram for the electronics in an embodiment of the present invention. It shows one or more turbines 1050, which generate alternating current (AC) from the water current(s). These provide one or more lines of respective AC 1060 to one or more inverters 1051, which convert the AC into direct current (DC). The respective one or more lines of DC 1061 are then provided to an Active Front End 1052 that reconverts the DC into AC. The AC 1062 is then provided to a power grid 1053 which is usually located on land and remotely from the floating turbine assembly 104.

Figure 28 also shows some optional features of this system diagram. One or more battery/batteries 1056 are provided to power any onboard systems 1057 when the turbines are not generating power. With a connection to a power grid 1053, however, the system may not need a battery 1056 as power can be drawn from the power grid 1053 instead. It should be noted that a charger/inverter 1054 is provided to convert the AC 1062 back to DC 1063 to charge the batteries 1056 or power the onboard systems 1057.

Another optional feature is a mast 1059 that enables external power to be provided into the floating turbine assembly 104, for example to charge the on-board battery/batteries 1056 or to provide power to the hydraulic systems 1058 or on-board electronic systems 1057. It is expected that this external power would be a temporary connection, for example provided by a surface vessel, where the batteries 1056 do not have sufficient charge and a connection to a power grid 1053 is not available. The mast 1059 can connect to the buoy 1004 via the buoy line 1005 and power can be provided to the buoy to power a light. The buoy 1004 may further comprise a radar reflector. The mast 1059 can also provide power to a wireless data link that can be provided on the buoy 1004. The buoy line 1005 can also comprise a data cable to link the wireless data link on the buoy to the floating turbine assembly 104. The buoy 1004 can also provide a means to control the floating turbine assembly 104 in the case of system failure, including control of the hydraulics systems 1058 and on-board electronic systems 1057. The buoy 1004 can also provide a means to provide air into the variable buoyancy tanks. The buoy line 1005 is attached to a mast that provides clearance for the line 1005 from the blades 132.

Finally, the hydraulic systems 1058 are connected to the AC 1062 to enable the floating turbine assembly 104 to power the hydraulics required to operate the winches, rotate the turbines 110 and operate the hydraulic rams that are used to make fine adjustments to the mooring lines.

The apparatus is configured to energise a DC rail in the electronic systems shown in Figure 28 to begin production of power from the turbines when sufficient water flow is detected, by for example a water flow sensor. To energise the DC rail, power can be drawn from either the battery 1056 or the connection to a power grid 1053.

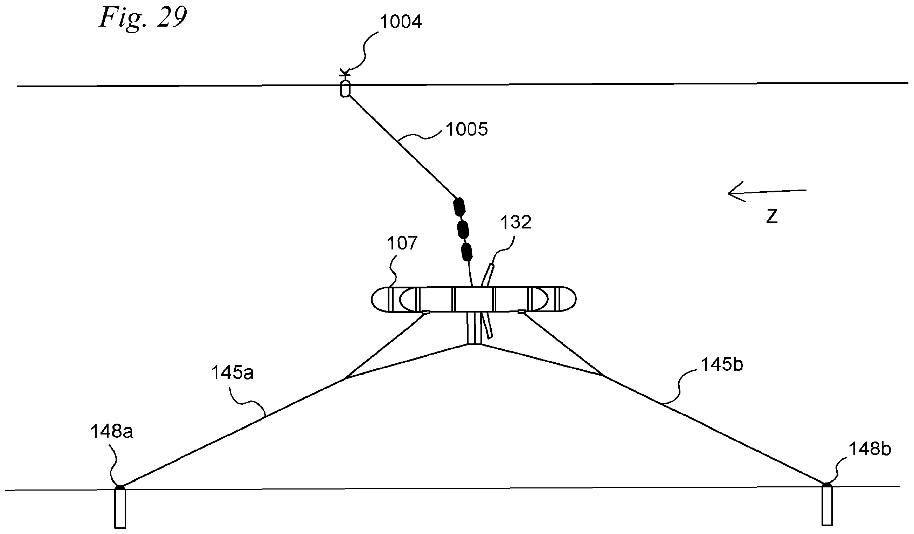

Another aspect of the invention relates to an embodiment of the invention that is provided with upstream turbines, i.e. turbines that only generate power when facing upstream. In this embodiment, and where the floating turbine assembly 104 is sited in a location that has bi-directional water flow, e.g. tidal flow, the present invention can be configured to provide power generation in both directions. Referring to Figure 29, there is provided a floating turbine assembly 104 of the present invention tethered using an anchoring system having four mooring lines or mooring line runs 145a, b, c & d attached at four anchoring points 148a, b, c & d fixed to the sea bed. The floating turbine assembly 104 also has a buoy 1004 connected to the central buoyancy device 107 with buoy line 1005. The current direction is in the direction of arrow Z and so the turbines 110 and blades 132 are oriented upstream into the current Z in order to generate power.

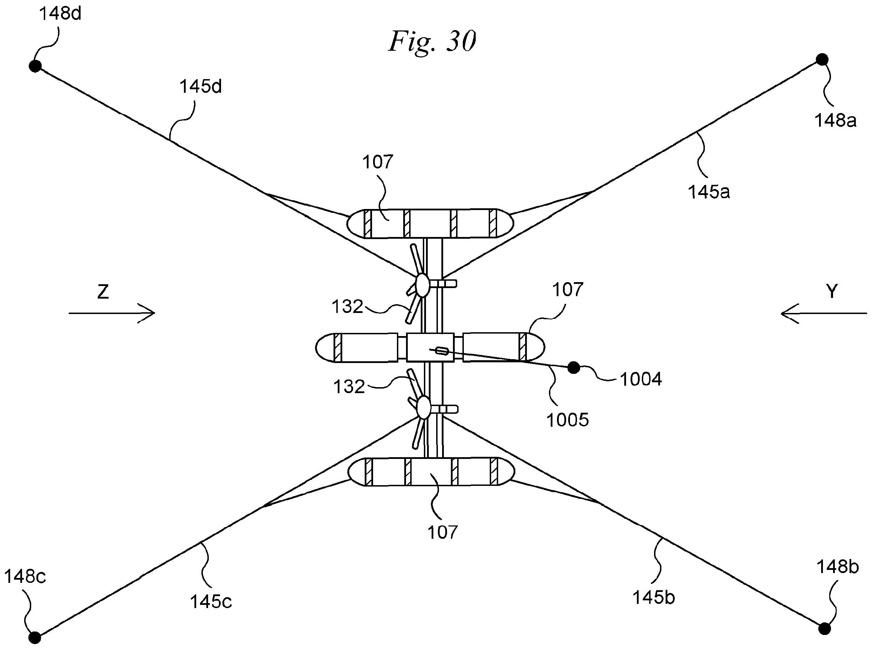

Referring now to Figure 30, the same floating turbine assembly 104 is shown generating power from current Z. At some point, the current Z will slow down and stop, then the current will change direction and instead increasingly flows in direction of arrow Y.

The floating turbine assembly 104 is provided with a mechanism for detecting water speed, for example a water speed sensor. As an alternative mechanism, the turbines 110 and blades 132 may themselves be used instead of a water speed sensor, for example either through monitoring the rotations of the blades 132 or through monitoring the level of power generation by the turbines 110.

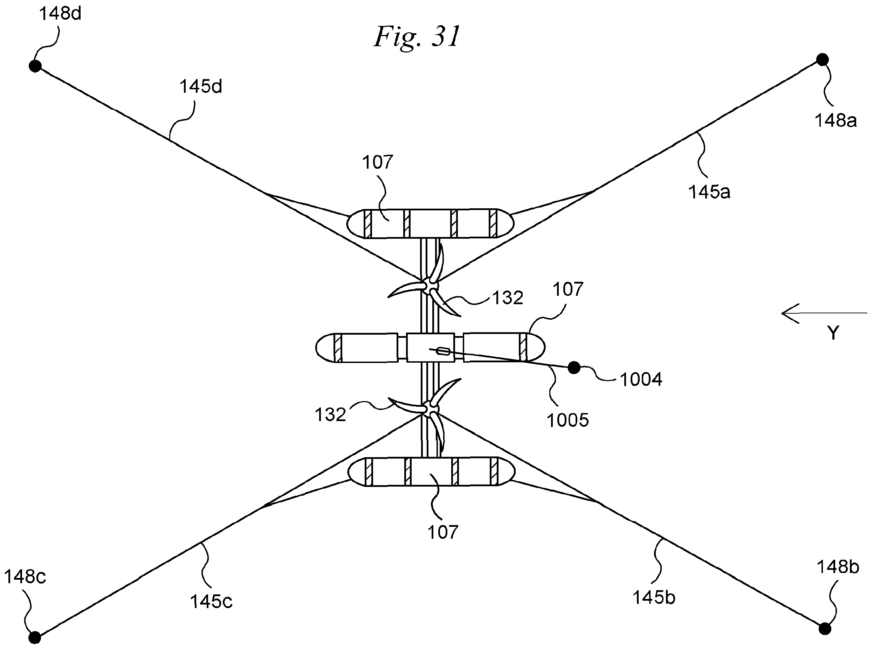

Referring now to Figure 31, at some point the speed of current Z will be determined to be too low to generate power, for example this can be predetermined and set by a threshold value determined by the specific combination of equipment used on-board the floating turbine assembly 104. When the speed of the current falls below the threshold the turbines 110 and blades 132 are rotated into an upright orientation, i.e. facing towards the surface of the water. An advantage of this orientation is a reduced need for a braking mechanism for the blades. Another potential advantage is that the upright orientation enables the blades to be braked without a braking mechanism. Some underwater turbines are not provided with a braking mechanism, so this will prevent the blades being rotated by a current as the blades will be facing out of the direction of a steady current. Some turbines only have brakes that can prevent the blades 132 moving (as opposed to slowing and stopping the blades once they have started moving) so this arrangement will remove the motive force that rotates the blades such that the braking mechanism can then lock the blades still, or prevent continuous movement that would cause the turbines to start generating power.

In addition to this arrangement above, one or more inverters can be provided within the floating turbine assembly 104. The inverter(s) are connected to the one or more turbines 110 and can be set to temporarily draw an increased amount of power from the turbines to provide electrical braking to slow the blades 132.

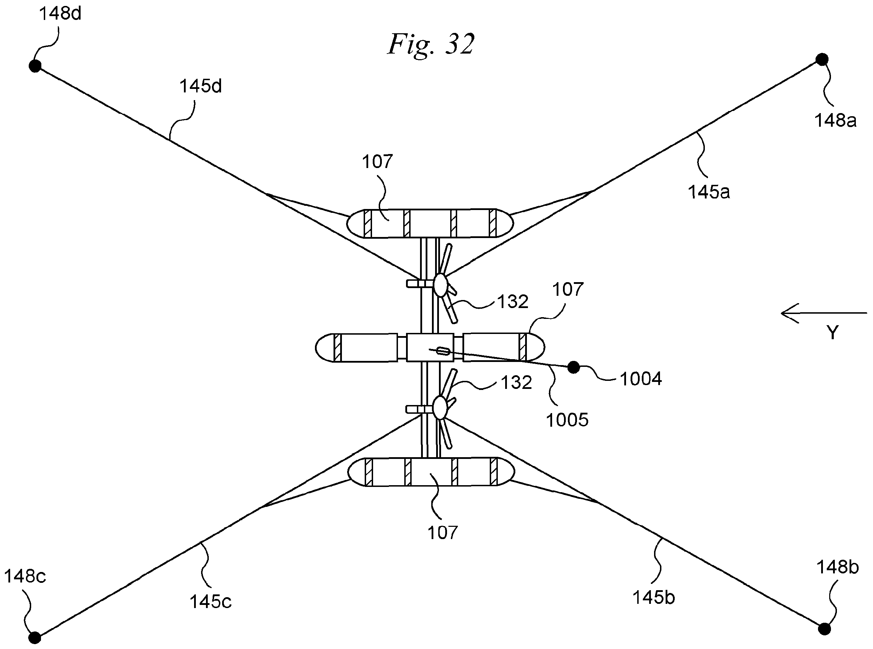

When sufficient current is detected in direction Y, the turbines 110 and rotors 132 are rotated as in Figure 32. The rotors 132 and turbines 110 in Figure 32 now face into the current Y and can generate power once there is sufficient water speed.

As noted above, each feature may be provided independently and applied to other embodiments or aspects.

**Claims**

1. A submersible turbine assembly (104) comprising:

   a frame (106a) sized and configured for supporting one or more flowing water driven turbines (110) at a predetermined depth range below the surface of a water body having a bed (102), the frame (106a) including at least one fixed buoyancy component (112) and at least one variable buoyancy component (114) and optionally one or more hydrodynamic lift-generating surfaces (150),
   the one or more flowing water driven turbines (110) being expected to produce a drag force which varies with water velocity,
   the assembly (104) being arranged to be maintained in a predetermined position above the water body bed (102) and submerged below the expected water body surface by at least two upstream taut mooring line runs (144b, 144c) and at least one downstream taut mooring line run (144a, 144d), wherein the mooring line runs are arranged to be anchored to the water body bed at respective anchor points (148a, 148b, 148c, 148d) spaced apart from a point below the expected position of the assembly by at least the height of the assembly (104) above the water bed (102),

the frame (106a) having attachment points for said taut mooring line runs (144) comprising upper and lower attachment points for spaced apart attachment of upper (146a, 146b, 146c, 146d) and lower (145a, 145b, 145c, 145d) or primary (146) and secondary (145) mooring lines or cables forming each mooring line run (144), each mooring cable coupling the upper and lower attachment points to a single anchor point on the water bed,

the attachment points arranged to permit movement of at least some of the mooring lines (144, 145, 146) relative to the frame (106a) during installation and having an arrangement for locking the mooring lines relative to the frame (106a) during use,

the assembly (104) being arranged so that in use in a water current having a nominal flow velocity of 3 metres per second both the upstream and downstream mooring line runs (144, 145, 146) remain taut and wherein the net upward force resulting from the fixed and variable buoyancy and any hydrodynamic lift minus the weight of the assembly (104) is at least 25% of the drag on the structure and thrust produced by the at least one turbine (110).

2. The assembly (104) of claim 1 arranged so that at 5 m/s the net upward force is no more than 200% of the drag on the structure and thrust produced by the at least one turbine (110).

**Patentansprüche**

1. Tauchturbinenanordnung (104), die Folgendes aufweist:

einen Rahmen (106a), der zum Tragen von einer oder mehr fließwasserangetriebenen Turbinen (110) auf einem vorbestimmten Tiefenbereich unter der Oberfläche eines Gewässers mit einem Boden (102) bemessen und gestaltet ist, wobei der Rahmen (106a) wenigstens eine Komponente mit unveränderlichem Auftrieb (112) und wenigstens eine Komponente mit veränderlichem Auftrieb (114) und wahlweise eine oder mehr hydrodynamischen Hub erzeugende Oberflächen (150) beinhaltet,

wobei erwartet wird, dass die eine oder mehr fließwasserangetriebenen Turbinen (110) eine Strömungswiderstandskraft erzeugen, die sich mit der Wassergeschwindigkeit verändert,

wobei die Anordnung (104) angeordnet ist, um von wenigstens zwei stromaufwärtigen gespannten Festmachersystemen (144b, 144c) und wenigstens einem stromabwärtigen gespannten Festmachersystem (144a, 144d) in einer vorbestimmten Position über dem Gewässerboden (102) und unter der erwarteten Gewässeroberfläche untergetaucht gehalten zu werden, wobei die Festmachersysteme zum Verankern am Gewässerboden an jeweiligen Ankerpunkten (148a, 148b, 148c, 148d) angeordnet sind, die durch wenigstens die Höhe der Anordnung (104) über dem Wasserboden (102) von einem Punkt unterhalb der erwarteten Position der Anordnung beabstandet sind,

wobei der Rahmen (106a) Anbringungspunkte für die genannten gespannten Festmachersysteme (144) hat, die obere und untere Anbringungspunkte für die beabstandete Anbringung von oberen (146a, 146b, 146c, 146d) und unteren (145a, 145b, 145c, 145d) oder primären (146) und sekundären (145) Festmachern oder Festmachleinen, die jedes Festmachersystem (144) bilden, aufweisen, wobei jede Festmachleine die oberen und unteren Anbringungspunkte mit einem einzelnen Ankerpunkt am Gewässerboden koppeln,

wobei die Anbringungspunkte angeordnet sind, um die Bewegung von wenigstens einigen der Festmacher (144, 145, 146) relativ zum Rahmen (106a) während der Montage zuzulassen, und eine Anordnung zum Arretieren der Festmacher relativ zum Rahmen (106a) während des Gebrauchs haben,

wobei die Anordnung (104) so angeordnet ist, dass im Gebrauch in einem Wasserstrom, der eine Nennfließgeschwindigkeit von 3 Meter pro Sekunde hat, sowohl die stromaufwärtigen als auch die stromabwärtigen Festmachersysteme (144, 145, 146) gespannt bleiben, und wobei die sich aus der unveränderlichen und der veränderlichen Auftriebskraft und einem hydrodynamischen Hub abzüglich des Gewichts der Anordnung (104) ergebende Nettoaufwärtskraft wenigstens 25 % des auf die Konstruktion wirkenden Strömungswiderstands und des von der wenigstens einen Turbine (110) erzeugten Schubs beträgt.

2. Anordnung (104) nach Anspruch 1, die so angeordnet ist, dass bei 5 m/s die Nettoaufwärtskraft nicht mehr als 200 % des auf die Konstruktion wirkenden Strömungswiderstands und des von der wenigstens einen Turbine (110) erzeugten Schubs ist.

**Revendications**

1. Ensemble turbine submersible (104) comprenant :

   un châssis (106a) dimensionné et configuré pour supporter une ou plusieurs turbines entraînées par l'eau en mouvement (110) à une plage de profondeurs prédéterminée en dessous de la surface d'une masse d'eau comportant un lit (102), le châssis (106a) comportant au moins un composant à flottabilité fixe (112) et au moins un composant à flottabilité variable (114) et facultativement une ou plusieurs surfaces génératrices de portance hydrodynamique (150),
   les une ou plusieurs turbines entraînées par l'eau en mouvement (110) étant supposées produire une force de traînée qui varie avec la vitesse de l'eau,
   l'ensemble (104) étant agencé pour être maintenu dans une position prédéterminée au-dessus du lit (102) de la masse d'eau et submergé en dessous de la surface de masse d'eau attendue par au moins deux longueurs de lignes d'amarrage tendues amont (144b, 144c) et au moins une longueur de ligne d'amarrage tendue aval (144a, 144d), dans lequel les longueurs de lignes d'amarrage sont agencées pour être ancrées au lit de la masse d'eau à des points d'ancrage respectifs (148a, 148b, 148c, 148d) espacés d'un point en dessous de la position prévue de l'ensemble par au moins la hauteur de l'ensemble (104) au-dessus du lit d'eau (102),
   le châssis (106a) ayant des points de fixation pour lesdites longueurs de lignes d'amarrage tendues (144) comprenant des points de fixation supérieurs et inférieurs pour la fixation espacée de lignes d'amarrage supérieures (146a, 146b, 146c, 146d) et inférieures (145a, 145b, 145c, 145d) ou principales (146) et secondaires (145) ou de câbles formant chaque longueur de ligne d'amarrage (144), chaque câble d'amarrage couplant les points de fixation supérieurs et inférieurs à un même point d'ancrage sur le lit d'eau,
   les points de fixation étant agencés pour permettre le mouvement d'au moins certaine des lignes d'amarrage (144, 145, 146) par rapport au châssis (106a) durant le montage et étant agencés pour verrouiller les lignes d'amarrage relativement au châssis (106a) durant l'utilisation,
   l'ensemble (104) étant agencés de telle sorte que durant l'utilisation dans un courant d'eau ayant une vitesse d'écoulement nominale de 3 mètres par seconde les longueurs de lignes d'amarrage amont et aval (144, 145, 146) restent tendues et dans lequel la force ascendante nette résultant des flottabilités fixe et variable et de toute portance hydrodynamique moins le poids de l'ensemble (104) soit au moins 25% de la traînée sur la structure et de la poussée produite par l'au moins une turbine (110).

2. Ensemble (104) selon la revendication 1 agencé de telle sorte qu'à 5 m/s la force ascendante nette ne dépasse pas 200% de la traînée sur la structure et de la poussée produite par l'au moins une turbine (110).

*Fig. 1*

*Fig. 2*

*Fig. 3*

*Fig. 4*

*Fig. 5*

EP 2 923 076 B1

*Fig. 6*

*Fig. 7C*     *Fig. 7B*     *Fig. 7A*

EP 2 923 076 B1

*Fig. 8*

Fig. 9

Fig. 10

*Fig. 11*

*Fig. 12*

*Fig. 13*

*Fig. 14*

*Fig. 15*

*Fig. 16*

*Fig. 17*

EP 2 923 076 B1

*Fig. 18*

EP 2 923 076 B1

Fig. 19

Fig. 20

EP 2 923 076 B1

## Fig. 21

## Fig. 22

*Fig. 23*

*Fig. 24*

*Fig. 25*

148c
145c
107
148b
145b
1005
1004
132
107
132
145a
145a
107
145d
148a
148d

EP 2 923 076 B1

Fig. 26

EP 2 923 076 B1

Fig. 27

Fig. 28

**Mast / Receptacle** — 1059

**Turbine(s)** — 1050

1060 — 1051

**Inverter(s)**

1053 — **Grid**

1062 — 1052

**Active Front End**

1061

**Charger / Inverter(s)** — 1054

1055 — 1056

**Hydraulic Power Pack** — 1058

1063

**Battery Control Box** — **Battery**

1057

**Onboard Systems**

EP 2 923 076 B1

*Fig. 29*

EP 2 923 076 B1

Fig. 30

*Fig. 31*

148d
145d
107
148a
145a
132
107
Y
1004
1005
132
107
148c
145c
107
148b
145b

EP 2 923 076 B1

52

EP 2 923 076 B1

*Fig. 32*

**EP 2 923 076 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9902853 A
- WO 2004085845 A
- WO 2005061887 A
- US 6091161 A
- GB 2460309 A
- WO 2009004420 A2